# EUROPÄISCHE PATENTSCHRIFT

(11) **EP 3 520 351 B1**
(45) Veröffentlichungstag und Bekanntmachung des Hinweises auf die Patenterteilung: **26.01.2022**
(21) Anmeldenummer: 17772397.0
(22) Anmeldetag: 22.09.2017
(51) Int. Cl.: H04L 29/06, H04L 29/08

(54) **VORRICHTUNG UND VERFAHREN ZUR DURCHGÄNGIGEN UND MEDIENÜBERGREIFENDEN ÜBERTRAGUNG VON KOMMUNIKATIONSPROTOKOLLEN OHNE PROTOKOLLUMSETZUNG**
DEVICE AND METHOD FOR CONTINUOUS AND CROSS-MEDIA TRANSMISSION OF COMMUNICATION PROTOCOLS WITHOUT PROTOCOL CONVERSION
DISPOSITIF ET PROCÉDÉ DE TRANSMISSION DE MANIÈRE CONTINUE ET DE TRANSMISSION MULTIMÉDIAS DE PROTOCOLES DE COMMUNICATION SANS CONVERSION DE PROTOCOLE

(30) Priorität: 28.09.2016 DE 102016218758
(43) Veröffentlichungstag der Anmeldung: 07.08.2019
(73) Patentinhaber: Fraunhofer-Gesellschaft zur Förderung der angewandten Forschung e.V., 80686 München (DE)
(72) Erfinder: OEDER, Andreas, 91058 Erlangen (DE); KLATT, Matthias, 91058 Erlangen (DE); LOSKE, Moritz, 91058 Erlangen (DE)
(74) Vertreter: Schairer, Oliver
(86) Internationale Anmeldenummer: PCT/EP2017/074054
(87) Internationale Veröffentlichungsnummer: WO 2018/060087

(56) Entgegenhaltungen:
- US-A1- 2005 226 206
- Anonymous: "Ethernet frame - Wikipedia", , 13. August 2016 (2016-08-13), XP055418149, Gefunden im Internet: URL:https://en.wikipedia.org/w/index.php?t itle=Ethernet_frame&oldid=734329410 [gefunden am 2017-10-23]

## Beschreibung

Die Anmeldung betrifft Datenübertragung, im Speziellen, Datenübertragung über verschiedene Kommunikationsmedien und, im Spezielleren, eine Vorrichtung und Verfahren zur durchgängigen und medienübergreifenden Übertragung von Kommunikationsprotokollen ohne Protokollumsetzung.

Die Datenübertragung über verschiedene Kommunikationsmedien hat unterschiedliche Stärken und Schwächen. Zunächst können die folgenden grundlegenden Kommunikationsmedien zur Datenübertragung voneinander unterschieden werden:
Einerseits gibt es die leitungsgebundene Datenübertragung ohne Trägermodulation über ein Kupferkabel. Diese wird im Folgenden als drahtgebundene Kommunikation bezeichnet.

Des Weiteren gibt es leitungsgebundene Datenübertragung mit Trägermodulation über einen Lichtwellenleiter.

Andererseits gibt es funkbasierte Datenübertragung, die im Folgenden als drahtlose Kommunikation bezeichnet wird.

Die drahtlose und drahtgebundene Datenübertragung haben unterschiedliche Stärken und Schwächen:
Die Reichweite und Zuverlässigkeit einer drahtlosen Datenübertragung ist abhängig von der Umgebung. Hindernisse wie z.B. Wände, Metallpfeiler oder eine große Maschine/Industrieanlage können die Ausbreitung der Funkwellen beeinträchtigen. Eine drahtgebundene Kommunikation ist hingegen (weitgehend) unabhängig von der Umgebung und baulichen Besonderheiten. Speziell innerhalb von Gebäuden ist die Reichweite von Funktechnologien oftmals sehr eingeschränkt.

Verschiedene Sender in einem Gebiet stören sich gegenseitig. Innerhalb eines Gebietes kann zu einem Zeitpunkt immer nur ein einzelner drahtloser Sender auf einer Frequenz eine Nachricht versenden. Die Anzahl der drahtgebundenen Netzwerke in einem Gebiet hingegen wird nicht durch andere Nutzer oder Interferenzen limitiert da es möglich ist (eine entsprechende gute Abschirmung vorausgesetzt) verschiedene Leitungen in unmittelbarer Nähe zueinander zu verlegen.

Ein großer Nachteil einer drahtgebundene gegenüber einer drahtlosen Kommunikationslösung ist, dass für eine drahtgebundene Übertragung stets die Verlegung eines Kabels notwendig ist.

Aus diesem Grund kommen häufig je nach Anwendungsgebiet und Umgebung verschiedene drahtgebundene und drahtlose Kommunikationsstandards und Kommunikationsprotokolle parallel und in Kombination zum Einsatz.

Das technische Problem liegt dabei in der Realisierung des medienübergreifenden Informationsaustausches ohne dass eine aufwendige Protokollumsetzung zwischen drahtgebundener und drahtloser Kommunikation notwendig wird. Eine direkte, medienübergreifende Kommunikation und Adressierung eines Kommunikationsknotens ist dadurch bislang nicht möglich. Als Folge hiervon ist derzeit eine medienübergreifende und durchgängige Layer2- Verschlüsselung (Link Layer / MAC Layer) nicht möglich.

Der Medienwechsel von drahtgebundener zur drahtlosen Datenübertragung wird bisher durch ein Gateway oder eine Bridge mittels Protokollumsetzung realisiert. Die Umsetzung der Protokolle kann sich dabei auf unterschiedliche Schichten des ISO/OSI Modells erstrecken.

Beispielsweise kann hier ein ZigBee Gateway von Ethernet nach ZigBee aus dem Stand der Technik (siehe: https://arxiv.org/ftp/arxiv/papers/1002/1002.1146.pdf) in Betracht gezogen werden.

Hinsichtlich des IEEE 802.15.4 Gateway existiert zahlreicher Stand der Technik.

Beispielsweise wird im Stand der Technik eine Zusammenschaltung von 802.15.4 Geräten und die Auswirkungen hinsichtlich IPv6 und auf existierende Ansätze beschrieben, siehe: https://arxiv.org/ftp/arxiv/papers/1002/1002.1146.pdf.

Zu TCP/IP über IEEE 802.15.4 findet sich eine Darstellung auf:
http://ihomelab.ch/fileadmin/Dateien/PDF/FHLuzern_TCPIPoverIEEE8022015204.pdf Ein IEEE 802.15.4/ZigBee zu IEEE 802.11 Gateway für die ART-WiSe Architectur ist auf https://www.researchgate.net/publication/224299487_On_a_IEEE_802154ZigBee_to _IEEE_80211_gateway_for_the_ART-WiSe_architecture beschrieben.

Der IEEE Standard 802.15.4-2006: Wireless Medium Access Control (MAC) and Physical Layer (PHY) Specifications for Low-Rate Wireless Personal Area Networks (LR-WPANs) findet sich auf http://standards.ieee.org/getieee802/download/802.15.4-2006.pdf Zur Übertragung von IPv6 Paketen über IEEE 802.15.4 Netzwerke siehe http://tools.ietf.org/html/rfc4944

Hinsichtlich des Kompressionsformats für IPv6 Pakete über IEEE 802.15.4-basierete Netzwerke, siehe: http://tools.ietf.org/html/rfc6282 .

US 2005/226206 A1 zeigt ein Netzwerkgerät und ein Verfahren zur Netzwerkkommunikation. In dem Netzwerkgerät, das ausgebildet ist, einem ersten Netzwerkkommunikationsgerät, das zu einem ersten drahtlosen Netzwerk gehört, die Kommunikation mit einem zweiten Netzwerkkommunikationsgerät zu ermöglichen, das zu einem zweiten drahtlosen Netzwerk gehört, umfasst das Netzwerkgerät eine Steuerung, die ein Paket erzeugt, das eine Protokolldateneinheit umfasst, die einen Datenbereich und einen Informationsbereich umfasst. Die Protokolldateneinheit weist Informationen zu einer ersten und einer zweiten Geräteidentifikation (ID) auf, die das erste bzw. das zweite Netzwerkkommunikationsgerät identifizieren.

Die Erfindung umfasst Vorrichtungen nach Ansprüchen 1 und 5, ein Datenpaket nach Anspruch 10, sowie Verfahren nach Ansprüchen 13 und 14 und ein Computerprogramm nach Anspruch 15.

Weitere bevorzugte Ausführungsformen der Erfindung werden in den abhängigen Ansprüchen beschrieben.

Nachfolgend werden bevorzugte Ausführungsformen der Erfindung unter Bezugnahme auf die Zeichnungen beschrieben.

In den Zeichnungen ist dargestellt:
- Fig. 1: zeigt eine Vorrichtung zur Weiterleitung eines Nutzdatenfelds aus einem ersten Kommunikationsnetz in zweites Kommunikationsnetz gemäß einer Ausführungsform;
- Fig. 2: zeigt eine Vorrichtung 200 zur Erzeugung und Übertragung eines Datenpakets gemäß einer Ausführungsform;
- Fig. 3: zeigt ein System zur Erzeugung und Übertragung eines Datenpakets über ein erstes Kommunikationsnetz und zur Weiterleitung eines Nutzdatenfelds des Datenpakets aus dem ersten Kommunikationsnetz in zweites Kommunikationsnetz gemäß einer Ausführungsform;
- Fig. 4: zeigt ein System gemäß einer Ausführungsform, das des Weiteren eine Empfangseinheit umfasst;
- Fig. 5: zeigt ein Datenpaket gemäß einer ersten Ausführungsform;
- Fig. G: zeigt ein Datenpaket gemäß einer zweiten Ausführungsform;
- Fig. 7: zeigt ein Datenpaket gemäß einer dritten Ausführungsform;
- Fig. 8: zeigt ein Datenpaket gemäß einer vierten Ausführungsform;
- Fig. 9: zeigt ein Schichtenmodell für einen loT-Bus gemäß einer Ausführungsform; und
- Fig. 10: zeigt eine Kommunikationsstruktur gemäß einer Ausführungsform.

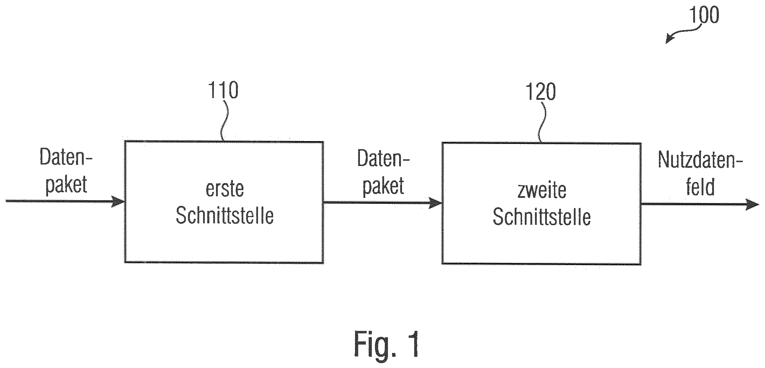

Fig. 1 zeigt eine Vorrichtung 100 zur Weiterleitung eines Nutzdatenfelds aus einem ersten Kommunikationsnetz in zweites Kommunikationsnetz gemäß einer Ausführungsform.

Die Vorrichtung 100 umfasst eine erste Schnittstelle 110, die ausgebildet ist, ein Datenpaket, von dem ersten Kommunikationsnetz zu empfangen, wobei das Datenpaket einen Datenpaket-Header und das Nutzdatenfeld umfasst, wobei der Datenpaket-Header ein Typfeld aufweist.

Des Weiteren umfasst die Vorrichtung 100 eine zweite Schnittstelle 120, die ausgebildet ist, das Nutzdatenfeld über das zweite Kommunikationsnetz zu übertragen, wenn das Typfeld einen Datenwert aufweist, der von einem ersten Datenwert verschieden ist. Die zweite Schnittstelle 120 ist ausgebildet, das Nutzdatenfeld nicht über das zweite Kommunikationsnetz zu übertragen, wenn das Typfeld den ersten Datenwert aufweist.

Beispielsweise kann das Typfeld dabei z.B. Kommunikationsnetz-spezifisch sein. So kann dieses Typfeld beispielsweise Informationen bezüglich des verwendeten Datenpaket-Typs (Frame-Typs) bezeichnen. Anhand des verwendeten Frame-Typs kann bestimmt werden ob es sich um beispielsweise ein Datenpaket (einen Frame) zur anwendungsbezogenen Datenübermittlung (z.B. Temperaturwerte eines Sensors) oder um ein Datenpaket (einen Frame) zur Verwaltung des ersten Kommunikationsnetz handelt. So können beispielsweise Frames zur anwendungsbezogenen Datenübermittlung frei zwischen dem ersten und dem zweiten Kommunikationsnetz ausgetauscht werden. Beispielsweise werden in bestimmten Ausführungsformen Datenpakete/Frames zur Verwaltung des ersten Kommunikationsnetzes nur innerhalb des ersten Kommunikationsnetzes, nicht aber in das zweite Kommunikationsnetz weitergeleitet.

Gemäß einer Ausführungsform kann die erste Schnittstelle 110 z.B. ausgebildet sein, das Datenpaket, von dem ersten Kommunikationsnetz zu empfangen, wobei das erste Kommunikationsnetz ein drahtgebundenes Kommunikationsnetz ist. Dabei kann die zweite Schnittstelle 120 ausgebildet sein, wenn das Typfeld einen Datenwert aufweist, der von dem ersten Datenwert verschieden ist, das Nutzdatenfeld über das zweite Kommunikationsnetz zu übertragen, wobei das zweite Kommunikationsnetz ein drahtloses Kommunikationsnetz ist. Ferner kann die zweite Schnittstelle 120 ausgebildet sein, wenn das Typfeld den ersten Datenwert aufweist, das Nutzdatenfeld nicht über das drahtlose Kommunikationsnetz zu übertragen.

In einer Ausführungsform kann das Datenpaket, wenn das Typfeld den ersten Datenwert aufweist, ein Datenpaket zur Verwaltung des ersten Kommunikationsnetzes sein, wobei die zweite Schnittstelle 120 ausgebildet sein kann, das Datenpaket nicht über das zweite Kommunikationsnetz zu übertragen, wenn das Datenpaket ein Datenpaket zur Verwaltung des ersten Kommunikationsnetzes ist.

Gemäß einer Ausführungsform kann das Typfeld des Datenpaket-Headers genau ein Bit umfassen. Dabei kann die zweite Schnittstelle 120 ausgebildet sein, das Nutzdatenfeld über das zweite Kommunikationsnetz zu übertragen, wenn das Typfeld einen zweiten Datenwert aufweist, die von dem ersten Datenwert verschieden sind. Ferner kann die zweite Schnittstelle 120 ausgebildet sein, das Nutzdatenfeld nicht über das zweite Kommunikationsnetz zu übertragen, wenn das Typfeld den ersten Datenwert aufweist.

In einer alternativen Ausführungsform kann das Typfeld des Datenpaket-Headers mehr als ein Bit umfassen. Dabei kann die zweite Schnittstelle 120 ausgebildet sein, das Nutzdatenfeld über das zweite Kommunikationsnetz zu übertragen, wenn das Typfeld einen von drei oder mehr Datenwerten aufweist, die von dem ersten Datenwert verschieden sind. Ferner kann die zweite Schnittstelle 120 ausgebildet sein, das Nutzdatenfeld nicht über das zweite Kommunikationsnetz zu übertragen, wenn das Typfeld den ersten Datenwert aufweist.

Gemäß einer Ausführungsform ist das Datenpaket ein empfangenes Datenpaket, wobei der Datenpaket-Header des empfangenen Datenpakets einen medienabhängigen Teil und einen medienunabhängigen Teil aufweisen kann, wobei der medienabhängige Teil das Typfeld umfasst- Ferner kann die zweite Schnittstelle 120 ausgebildet sein, wenn das Typfeld einen Datenwert aufweist, der von dem ersten Datenwert verschieden ist, ein umgeformtes Datenpaket zu bilden und über das zweite Kommunikationsnetz zu übertragen, wobei das umgeformte Datenpaket den medienunabhängigen Teil des Datenpaket-Headers des empfangenen Datenpakets und das Nutzdatenfeld des empfangenen Datenpakets umfasst, aber nicht den medienabhängigen Teil des Datenpaket-Headers des empfangenen Datenpakets umfasst.

In einer Ausführungsform kann das empfangene Datenpaket ferner ein oder mehrere Prüfbits umfassen. Dabei kann die zweite Schnittstelle 120 ausgebildet sein, wenn das Typfeld einen Datenwert aufweist, der von dem ersten Datenwert verschieden ist, das umgeformte Datenpaket so zu bilden, dass das umgeformte Datenpaket die ein oder mehreren Prüfbits des empfangenen Datenpakets als ein oder mehrere Prüfbits des umgeformten Datenpakets umfasst, ohne den Wert der ein oder mehreren Prüfbits in dem umgeformten Datenpaket im Vergleich zu den ein oder mehreren Prüfbits des empfangenen Datenpakets zu verändern.

Gemäß einer Ausführungsform sind die ein oder mehreren Prüfbits des empfangenen Datenpakets ein oder mehrere empfangene Prüfbits, wobei die erste Schnittstelle 110 ausgebildet sein kann, ein oder mehrere ermittelte Prüfbits zu bestimmen. Dabei kann die erste Schnittstelle 110 ausgebildet sein, die ein oder mehreren ermittelten Prüfbits basierend auf dem medienunabhängigen Teil des Datenpaket-Headers des empfangenen Datenpakets und basierend auf dem Nutzdatenfeld des empfangenen Datenpakets, aber nicht basierend auf dem medienabhängigen Teil des Datenpaket-Headers des empfangenen Datenpakets zu bestimmen. Ferner kann die erste Schnittstelle 110 ausgebildet sein, die ein oder mehreren ermittelten Prüfbits mit den ein oder mehreren empfangenen Prüfbits zu vergleichen, um das empfangene Datenpaket auf Fehler zu überprüfen.

Dies hat den Vorteil, dass beim Wechsel vom ersten Kommunikationsnetz in das zweite Kommunikationsnetz der medienabhängige Teil des Datenpaket-Headers entfernt werden kann, ohne dass die Prüfbits geändert werden müssen, denn diese beziehen sich nur auf den medienunabhängigen Teil des Datenpaket-Headers und das Nutzdatenfeld, nicht aber auf den medienabhängigen Teil des Datenpaket-Headers.

In einer Ausführungsform kann die erste Schnittstelle 110 ausgebildet sein, das empfangene Datenpaket an die zweite Schnittstelle 120 zu übergeben, wenn die ein oder mehreren empfangenen Prüfbits mit den ein oder mehreren ermittelten Prüfbits übereinstimmen. Ferner kann die erste Schnittstelle 110 ausgebildet sein, das empfangene Datenpaket nicht an die zweite Schnittstelle 120 zu übergeben, wenn die ein oder mehreren empfangenen Prüfbits mit den ein oder mehreren ermittelten Prüfbits nicht übereinstimmen.

In einer Ausführungsform kann das Nutzdatenfeld des empfangenen Datenpakets ein verschlüsseltes Nutzdatenfeld sein, das in verschlüsselter Form vorliegt. Die zweite Schnittstelle 120 kann dabei ausgebildet sein, wenn das Typfeld einen Datenwert aufweist, der von dem ersten Datenwert verschieden ist, ohne das verschlüsselte Nutzdatenfeld zu entschlüsseln, das umgeformte Datenpaket so zu bilden, dass das umgeformte Datenpacket das verschlüsselte Datenfeld umfasst. Ein Entschlüsseln und erneutes Verschlüsseln des Nutzdatenfeldes ist also nicht erforderlich.

Gemäß einer Ausführungsform kann der medienunabhängige Teil des Datenpaket-Headers ein verschlüsselter medienunabhängiger Teil des Datenpaket-Headers sein, der in verschlüsselter Form vorliegt. Die zweite Schnittstelle 120 ausgebildet sein, wenn das Typfeld einen Datenwert aufweist, der von dem ersten Datenwert verschieden ist, den verschlüsselten medienunabhängigen Teil des Datenpaket-Headers zu entschlüsseln, um entschlüsselte Header-Information zu erhalten, die eine Zieladresse umfasst, des Weiteren das umgeformte Datenpaket so zu bilden, dass das umgeformte Datenpaket den verschlüsselten medienunabhängigen Teil des Datenpaket-Headers umfasst, ohne die entschlüsselte Header-Information erneut zu verschlüsseln, und des Weiteren, in Abhängigkeit vor der Zieladresse, das umgeformte Datenpaket über das zweite Kommunikationsnetz zu einem Ziel zu übertragen.

So kann beispielsweise der verschlüsselte medienunabhängige Teil des Datenpaket-Headers entschlüsselt werden, um die Header-Information mit der Zieladresse zu erhalten, indem beispielsweise ein Netzwerkschlüssel, der in der Schnittstelle vorliegt, zur Entschlüsselung verwendet wird. Dieser Netzwerkschlüssel kann dann noch in einer Vielzahl von weiteren Schnittstellen vorliegen, die dann den verschlüsselten medienunabhängigen Teil des Datenpaket-Headers wiederum entschlüsseln, um die Zieladresse zu ermitteln. Wesentlich ist aber, dass es nicht erforderlich ist, den entschlüsselten medienunabhängigen Teil des Datenpaket-Headers erneut zu verschlüsseln. Stattdessen kann der verschlüsselte medienunabhängige Teil des Datenpaket-Headers in selber Form wie im empfangenen Datenpaket auch in das umgeformte Datenpaket wieder eingefügt werden. Dies spart Ressourcen in der Vorrichtung 100.

Gemäß einer Ausführungsform kann der medienunabhängige Teil des Datenpaket-Headers des empfangenen Datenpakets ein Netzzugangsschicht-Header einer Netzzugangsschicht des TCP/IP-Protokollstapels sein (Netzzugangsschicht: die Schicht im TCP/IP-Protokollstapel direkt unterhalb der IP-Schicht). Die zweite Schnittstelle 120 kann dabei ausgebildet sein, wenn das Typfeld einen Datenwert aufweist, der von dem ersten Datenwert verschieden ist, das umgeformtes Datenpaket so zu bilden, dass das umgeformte Datenpaket den medienunabhängigen Teil des Datenpaket-Headers des empfangenen Datenpakets als Netzzugangsschicht-Header der Netzzugangsschicht des TCP/IP-Protokollstapels in dem umgeformten Datenpaket zu belassen. Oder, der medienunabhängige Teil des Datenpaket-Headers des empfangenen Datenpakets kann ein Sicherungsschicht-Header einer Sicherungsschicht des ISO/OSI-Modell-Protokollstapels sein, wobei die zweite Schnittstelle 120 ausgebildet sein kann, wenn das Typfeld einen Datenwert aufweist, der von dem ersten Datenwert verschieden ist, das umgeformtes Datenpaket so zu bilden, dass das umgeformte Datenpaket den medienunabhängigen Teil des Datenpaket-Headers des empfangenen Datenpakets als Sicherungsschicht-Header der Sicherungsschicht des ISO/OSI-Modell-Protokollstapels in dem umgeformten Datenpaket zu belassen.

In einer Ausführungsform kann der medienunabhängige Teil des Datenpaket-Headers des empfangenen Datenpakets ein Datenpaket-Header gemäß IEEE 802.15.4 sein. Dabei kann die zweite Schnittstelle 120 ausgebildet sein, wenn das Typfeld einen Datenwert aufweist, der von dem ersten Datenwert verschieden ist, das umgeformte Datenpaket so zu bilden, dass das umgeformte Datenpaket den medienunabhängige Teil des Datenpaket-Headers des empfangenen Datenpakets als einen Datenpaket-Header gemäß IEEE 802.15.4 umfasst.

Gemäß einer Ausführungsform kann das empfangene Datenpaket des Weiteren einen weiteren Header aufweisen, der ein Header einer physikalischen Schicht des ISO/OSI-Modell-Protollstapels ist. Dabei kann die zweite Schnittstelle 120 ausgebildet sein, wenn das Typfeld einen Datenwert aufweist, der von dem ersten Datenwert verschieden ist, das umgeformte Datenpaket so zu bilden, dass das umgeformte Datenpaket wiederum einen Header der physikalischen Schicht des ISO/OSI-Modell-Protokollstapels aufweist, der von dem weiterem Header des empfangenen Datenpakets verschieden ist.

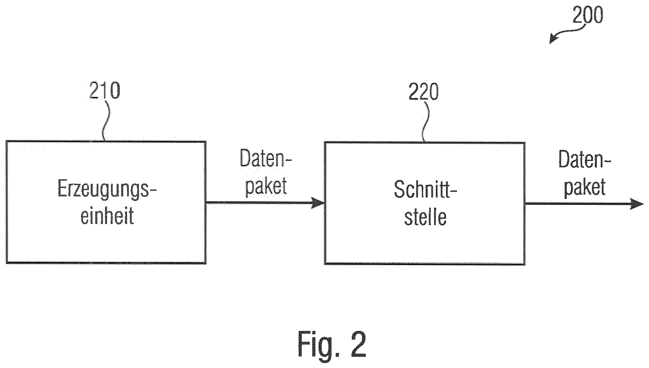

Fig. 2 zeigt eine Vorrichtung 200 zur Erzeugung und Übertragung eines Datenpakets gemäß einer Ausführungsform. Die Vorrichtung 200 umfasst eine Erzeugungseinheit 210, die ausgebildet ist das Datenpaket zu erzeugen, so dass das Datenpaket, einen Datenpaket-Header und ein Nutzdatenfeld umfasst, wobei der Datenpaket-Header ein Typfeld aufweist. Des Weiteren umfasst die Vorrichtung 200 eine Schnittstelle 220, die ausgebildet ist, das Datenpaket über ein erstes Kommunikationsnetz zu einer Empfangsvorrichtung 100 (in Fig. 2 nicht gezeigt) zu übertragen. Die Erzeugungseinheit 210 ist ausgebildet, das Datenpaket so zu erzeugen, dass das Typfeld einen ersten Datenwert aufweist, wenn das Nutzdatenfeld des Datenpakets nicht von der Empfangsvorrichtung 100 über ein zweites Kommunikationsnetz übertragen werden sollen. Ferner ist die Erzeugungseinheit 210 ausgebildet, das Datenpaket so zu erzeugen, dass das Typfeld einen Datenwert aufweist, der von dem ersten Datenwert verschieden ist, wenn das Nutzdatenfeld des Datenpakets von der Empfangsvorrichtung 100 über das zweite Kommunikationsnetz übertragen werden sollen.

In einer Ausführungsform kann das erste Kommunikationsnetz ein drahtgebundenes Kommunikationsnetz sein, und das zweite Kommunikationsnetz kann ein drahtloses Kommunikationsnetz sein. Dabei kann die Erzeugungseinheit 210 ausgebildet sein, das Datenpaket so zu erzeugen, dass das Typfeld den ersten Datenwert aufweist, wenn das Nutzdatenfeld des Datenpakets nicht von der Empfangsvorrichtung 100 über das drahtlose Kommunikationsnetz übertragen werden sollen. Ferner kann dabei die Erzeugungseinheit 210 ausgebildet sein, das Datenpaket so zu erzeugen, dass das Typfeld einen Datenwert aufweist, der von dem ersten Datenwert verschieden ist, wenn das Nutzdatenfeld des Datenpakets von der Empfangsvorrichtung 100 über das drahtlose Kommunikationsnetz übertragen werden sollen.

Gemäß einer Ausführungsform kann die Erzeugungseinheit 210 ausgebildet sein, das Datenpaket so zu erzeugen, dass das Typfeld den ersten Datenwert aufweist, wenn das Datenpaket ein Datenpaket zur Verwaltung des ersten Kommunikationsnetzes ist. Ferner kann die Erzeugungseinheit 210 ausgebildet sein, das Datenpaket so zu erzeugen, dass das Typfeld einen Datenwert aufweist, der von dem ersten Datenwert verschieden ist, wenn das Datenpaket nicht ein Datenpaket zur Verwaltung des ersten Kommunikationsnetzes ist.

In einer Ausführungsform kann die Erzeugungseinheit 210 ausgebildet sein, das Typfeld des Datenpaket-Headers so zu bilden, dass das Typfeld des Datenpaket-Headers genau ein Bit umfasst. Ferner kann die Erzeugungseinheit 210 ausgebildet sein, das Datenpaket so zu erzeugen, dass das Typfeld den ersten Datenwert aufweist, wenn das Nutzdatenfeld des Datenpakets nicht von der Empfangsvorrichtung 100 über das zweite Kommunikationsnetz übertragen werden sollen. Des Weiteren kann die Erzeugungseinheit 210 ausgebildet sein, das Datenpaket so zu erzeugen, dass das Typfeld einen zweiten Datenwert aufweist, der von dem ersten Datenwert verschieden ist, wenn das Nutzdatenfeld des Datenpakets nicht von der Empfangsvorrichtung 100 über das zweite Kommunikationsnetz übertragen werden sollen.

Gemäß einer Ausführungsform kann die Erzeugungseinheit 210 ausgebildet sein, das Typfeld des Datenpaket-Headers so zu bilden, dass das Typfeld des Datenpaket-Headers mehr als ein Bit umfasst. Dabei kann die Erzeugungseinheit 210 ausgebildet sein, das Datenpaket so zu erzeugen, dass das Typfeld den ersten Datenwert aufweist, wenn das Nutzdatenfeld des Datenpakets nicht von der Empfangsvorrichtung 100 über das zweite Kommunikationsnetz übertragen werden sollen. Ferner kann die Erzeugungseinheit 210 ausgebildet sein, das Datenpaket so zu erzeugen, dass das Typfeld einen von drei oder mehr Datenwerten aufweist, die von dem ersten Datenwert verschieden sind, wenn das Nutzdatenfeld des Datenpakets von der Empfangsvorrichtung 100 über das zweite Kommunikationsnetz übertragen werden sollen.

Gemäß einer Ausführungsform kann die Erzeugungseinheit 210 ausgebildet sein, das Datenpaket so zu bilden, dass das Datenpaket das Nutzdatenfeld als ein verschlüsseltes Nutzdatenfeld in verschlüsselter Form umfasst.

In einer Ausführungsform kann die Erzeugungseinheit 210 ausgebildet sein, den Datenpaket-Header des Datenpakets so zu bilden, dass der Datenpaket-Header einen medienabhängigen Teil und einen medienunabhängigen Teil aufweist. Dabei kann die Erzeugungseinheit 210 ausgebildet sein, den medienabhängigen Teil des Datenpaket-Headers so zu bilden, dass der medienabhängige Teil das Typfeld umfasst. Ferner kann die Erzeugungseinheit 210 ausgebildet sein, das Datenpaket so zu bilden, dass das Datenpaket ferner ein oder mehrere Prüfbits umfasst. Dabei kann die Erzeugungseinheit 210 ausgebildet sein, die ein oder mehreren Prüfbits basierend auf dem medienunabhängigen Teil des Datenpaket-Headers des Datenpakets und basierend auf dem Nutzdatenfeld des Datenpakets, aber nicht basierend auf dem medienabhängigen Teil des Datenpaket-Headers des Datenpakets zu bestimmen.

In einer Ausführungsform kann die Erzeugungseinheit 210 ausgebildet sein, den Datenpaket-Header des Datenpakets so zu bilden, dass der Datenpaket-Header den medienunabhängigen Teil des Datenpaket-Headers als einen verschlüsselten medienunabhängigen Teil des Datenpaket-Headers in verschlüsselter Form umfasst.

Gemäß einer Ausführungsform kann die Erzeugungseinheit 210 ausgebildet sein, den Datenpaket-Header des Datenpakets so zu bilden, dass der medienunabhängige Teil des Datenpaket-Headers des Datenpakets ein Netzzugangsschicht-Header einer Netzzugangsschicht des TCP/IP-Protokollstapels ist. Oder, die Erzeugungseinheit 210 kann ausgebildet sein, den Datenpaket-Header des Datenpakets so zu bilden, dass der medienunabhängige Teil des Datenpaket-Headers des Datenpakets ein Sicherungsschicht-Header einer Sicherungsschicht des ISO/OSI-Modell-Protokollstapels ist.

In einer Ausführungsform kann die Erzeugungseinheit 210 ausgebildet sein, den Datenpaket-Header des Datenpakets so zu bilden, dass der medienunabhängige Teil des Datenpaket-Headers des Datenpakets ein Datenpaket-Header gemäß IEEE 802.15.4 ist.

Gemäß einer Ausführungsform kann die Erzeugungseinheit 210 ausgebildet sein, das Datenpaket so zu bilden, dass das Datenpaket des Weiteren einen weiteren Header aufweist, der ein Header einer physikalischen Schicht des ISO/OSI-Modell-Protollstapels ist.

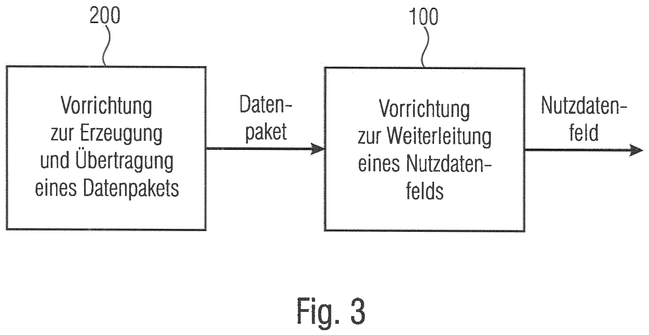

Fig. 3 zeigt ein System zur Erzeugung und Übertragung eines Datenpakets über ein erstes Kommunikationsnetz und zur Weiterleitung eines Nutzdatenfelds des Datenpakets aus dem ersten Kommunikationsnetz in zweites Kommunikationsnetz gemäß einer Ausführungsform.

Das System umfasst die oben beschriebene Vorrichtung 200 zur Erzeugung und Übertragung eines Datenpakets zur Erzeugung des Datenpakets, und die oben beschriebene Vorrichtung 100 zur Weiterleitung eines Nutzdatenfelds aus einem ersten Kommunikationsnetz in zweites Kommunikationsnetz.

Die Vorrichtung 200 zur Erzeugung und Übertragung eines Datenpakets ist ausgebildet, das Datenpaket über das erste Kommunikationsnetz zur Vorrichtung zur Weiterleitung eines Nutzdatenfelds aus einem ersten Kommunikationsnetz in zweites Kommunikationsnetz zu übertragen.

Die Vorrichtung 100 zur Weiterleitung eines Nutzdatenfelds aus einem ersten Kommunikationsnetz in zweites Kommunikationsnetz ist ausgebildet, das Datenpaket von der Vorrichtung 200 zur Erzeugung und Übertragung eines Datenpakets zu empfangen. Ferner ist die Vorrichtung 100 zur Weiterleitung eines Nutzdatenfelds aus einem ersten Kommunikationsnetz in zweites Kommunikationsnetz ausgebildet, das Nutzdatenfeld über das zweite Kommunikationsnetz zu übertragen, wenn ein Typfeld eines Datenpaket-Headers des Datenpakets einen Datenwert aufweist, der von einem ersten Datenwert verschieden ist. Des Weiteren ist die Vorrichtung 100 zur Weiterleitung eines Nutzdatenfelds aus einem ersten Kommunikationsnetz in zweites Kommunikationsnetz ausgebildet, das Nutzdatenfeld nicht über das zweite Kommunikationsnetz zu übertragen, wenn das Typfeld des Datenpaket-Headers des Datenpakets den ersten Datenwert aufweist.

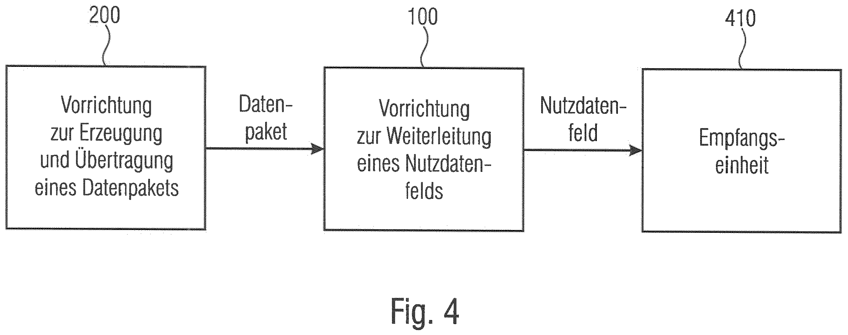

In Fig. 4 umfasst das System der Fig. 3 des Weiteren eine Empfangseinheit 410, die ausgebildet ist, das Nutzdatenfeld des Datenpakets von der Vorrichtung zur Weiterleitung eines Nutzdatenfelds aus einem ersten Kommunikationsnetz in zweites Kommunikationsnetz zu empfangen.

Die Vorrichtung 100 zur Weiterleitung eines Nutzdatenfelds aus einem ersten Kommunikationsnetz in zweites Kommunikationsnetz ist ausgebildet, das Nutzdatenfeld zu der Empfangseinheit 410 über das zweite Kommunikationsnetz zu übertragen, wenn das Typfeld das Datenpaket-Headers des Datenpakets einen Datenwert aufweist, der von einem ersten Datenwert verschieden ist.

Des Weiteren ist die Vorrichtung zur Weiterleitung eines Nutzdatenfelds 100 aus einem ersten Kommunikationsnetz in zweites Kommunikationsnetz ausgebildet, das Nutzdatenfeld nicht zu der Empfangseinheit 410 über das zweite Kommunikationsnetz zu übertragen, wenn das Typfeld des Datenpaket-Headers des Datenpakets den ersten Datenwert aufweist.

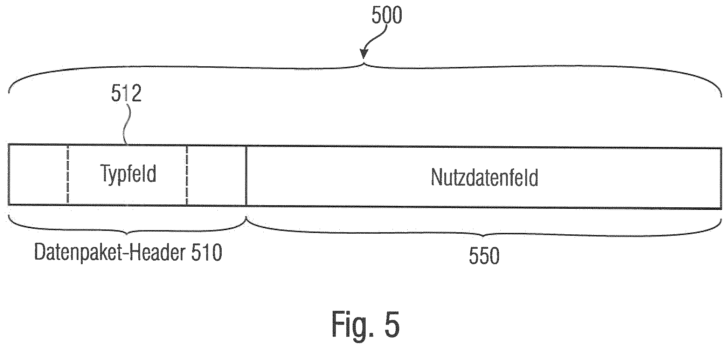

Fig. 5 zeigt ein Datenpaket 500 zur Übertragung eines Nutzdatenfelds über ein erstes Kommunikationssetz zu einer Empfangsvorrichtung. Das Datenpaket 500 umfasst einen Datenpaket-Header 510 und das Nutzdatenfeld 550. Der Datenpaket-Header 510 weist ein Typfeld 512 auf. Das Typfeld 512 weist einen ersten Datenwert auf, wenn das Nutzdatenfeld 550 des Datenpakets 500 nicht von der Empfangsvorrichtung 100 (in Fig. 5 nicht gezeigt) über ein zweites Kommunikationsnetz übertragen werden sollen. Das Typfeld 512 weist einen Datenwert auf, der von dem ersten Datenwert verschieden ist, wenn das Nutzdatenfeld 550 des Datenpakets 500 von der Empfangsvorrichtung 100 über das zweite Kommunikationsnetz übertragen werden sollen.

Gemäß einer Ausführungsform kann das erste Kommunikationsnetz ein drahtgebundenes Kommunikationsnetz sein, und das zweite Kommunikationsnetz kann ein drahtloses Kommunikationsnetz sein. Das Typfeld 512 weist dabei den ersten Datenwert auf, wenn das Nutzdatenfeld 550 des Datenpakets 500 nicht von der Empfangsvorrichtung 100 über das drahtlose Kommunikationsnetz übertragen werden sollen. Ferner weist das Typfeld 512 einen Datenwert auf, der von dem ersten Datenwert verschieden ist, wenn das Nutzdatenfeld 550 des Datenpakets 500 von der Empfangsvorrichtung 100 über das drahtlose Kommunikationsnetz übertragen weiden sollen.

In einer Ausführungsform weist das Typfeld 512 den ersten Datenwert aufweist, und das Datenpaket 500 ist ein Datenpaket zur Verwaltung des ersten Kommunikationsnetzes.

Gemäß einer Ausführungsform weist das Typfeld 512 einen Datenwert auf, der von dem ersten Datenwert verschieden ist, und das Datenpaket 500 ist kein Datenpaket zur Verwaltung des ersten Kommunikationsnetzes.

In einer Ausführungsform kann das Datenpaket 500 das Nutzdatenfeld 550 als ein verschlüsseltes Nutzdatenfeld in verschlüsselter Form umfassen.

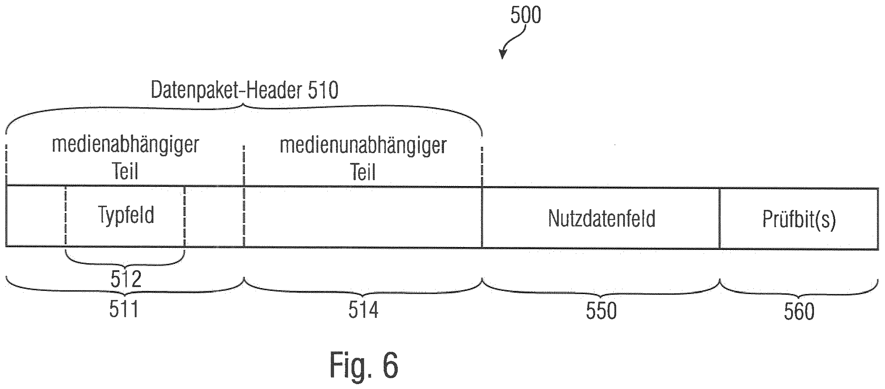

Fig. 6 zeigt ein Datenpaket 500 gemäß einer Ausführungsform.

Der Datenpaket-Header 510 weist einen medienabhängigen Teil 511 und einen medienunabhängigen Teil 514 auf. Dabei umfasst der medienabhängige Teil 511 das Typfeld 512.

Ferner umfasst das Datenpaket 500 ein oder mehrere Prüfbits 560. Dabei hängen die ein oder mehreren Prüfbits 560 von dem medienunabhängigen Teil 514 des Datenpaket-Headers 510 des Datenpakets 500 ab und hängen des Weiteren von dem Nutzdatenfeld 550 des Datenpakets 500 ab. Die Prüfbits 560 hängen aber nicht von dem medienabhängigen Teil 511 des Datenpaket-Headers 510 des Datenpakets 500 ab.

Gemäß einer Ausführungsform kann der Datenpaket-Header 510 den medienunabhängigen Teil 514 als einen verschlüsselten medienunabhängigen Teil in verschlüsselter Form umfassen.

In einer Ausführungsform kann der medienunabhängige 514 Teil des Datenpaket-Headers 510 des Datenpakets 500 ein Netzzugangsschicht-Header einer Netzzugangsschicht des TCP/IP-Protokollstapels sein. Oder, der medienunabhängige Teil 514 des Datenpaket-Headers 510 des Datenpakets 500 kann ein Sicherungsschicht-Header einer Sicherungsschicht des ISO/OSI-Modell-Protokollstapels sein.

Gemäß einer Ausführungsform kann der medienunabhängige Teil 514 des Datenpaket-Headers 510 des Datenpakets 500 ein Datenpaket-Header gemäß IEEE 802.15.4 sein.

Was das Nutzdatenfeld 550 betrifft, so versteht sich, dass das Nutzdatenfeld 550 selbst wiederum Header-Felder und Nutzdaten-Felder höherer Protokollschichten umfassen kann.

Handelt es sich beispielsweise bei dem medienunabhängigen Teil 514 des Datenpaket-Headers 510 um einen Sicherungsschicht-Header (Schicht 2 Header; englisch: data link layer header) des ISO/OSI-Modell-Protokollstapels, so umfasst das Nutzdatenfeld 550 beispielsweise das Header-Feld und das Nutzdaten-Feld der Vermittlungsschicht (Schicht 3; englisch: network layer) des ISO/OSI-Modell-Protokollstapels.

Oder aber, handelt es sich beispielsweise bei dem medienunabhängigen Teil 514 des Datenpaket-Headers 510 um einen Netzzugangsschicht-Header des TCP/IP-Protokollstapels, so umfasst das Nutzdatenfeld 550 beispielsweise das Header-Feld und das Nutzdaten-Feld der IP-Schicht des IP-Protokollstapels.

Gleiches gilt für höhere Schichten des jeweiligen Protokollstapels.

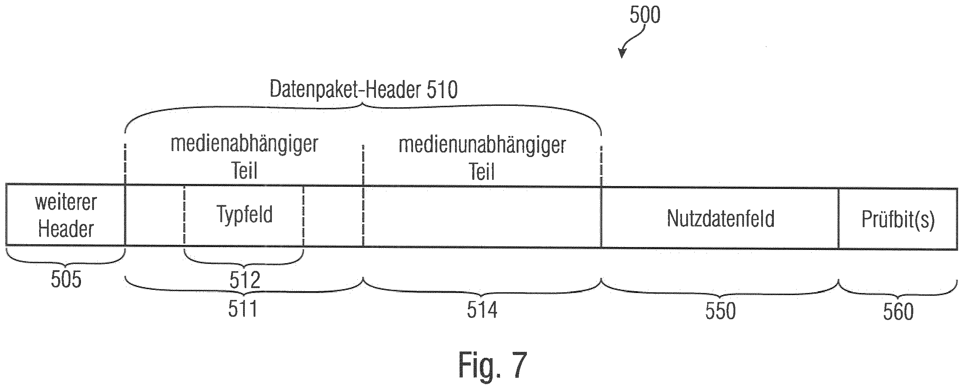

Fig. 7 zeigt ein Datenpaket 500 gemäß einer Ausführungsform, das des Weiteren einen weiteren Header 505 auf. Dieser weitere Header 505 kann ein Header einer physikalischen Schicht des ISO/OSI-Modell-Protollstapels sein.

Ausführungsformen ermöglichen zwischen verschiedenen Medien ohne Protokoll- oder Adressumsetzung Informationen auszutauschen. Der größte Teil der Nachricht bleibt in Aufbau und Inhalt identisch, nur ein kleiner medienabhängiger Teil des Headers muss angepasst werden.

Beim Wechsel zwischen drahtlosen und drahtgebundenen Netzwerk wird der Header wie folgt angepasst:
Bei dem Wechsel vom drahtlosen Netzwerk in das drahtgebundene Netzwerk wird der Header der Verbindungssicherungsschicht unverändert übernommen. Das Nutzdatenfeld können ebenfalls, auch bei Verschlüsselung, unverändert übernommen werden. Die Prüfsumme kann ebenfalls unverändert übernommen werden, vorausgesetzt die Berechnung der Prüfsumme setzt auf der Verbindungssicherungsschicht an.

Beim Wechsel vom drahtgebunden Netzwerk in das drahtlose Netzwerk werden lediglich die Informationen im medienabhängigen Header mit den notwendigen Informationen für die drahtlose Kommunikation ausgetauscht. Der medienunabhängige Header der Verbindungssicherungsschicht muss nicht angepasst werden. Das Nutzdatenfeld können ebenfalls, auch bei Verschlüsselung, unverändert übernommen werden. Die Prutsumme kann ebenfalls unverändert übernommen werden, vorausgesetzt die Berechnung der Prüfsumme setzt auf der Verbindungssicherungsschicht an.

Zusätzlich kann die Verschlüsselung auf Layer 2 (MAC Layer) beim Medienwechsel von drahtgebunden zu Funk und umgekehrt zwischen zwei Kommunikationsknoten bestehen bleiben. Damit können die Vorteile der Layer 2 Verschlüsselung, wie Protokollunabhängigkeit und geringe Latenz, auch beim Medienwechsel genutzt werden.

Besonders vorteilhafte Ausführungsformen werden im Folgenden dargestellt.

Um auf eine Protokollumsetzung zur medienübergreifenden Kommunikation auf der Ebene der Verbindungssicherungsschicht (OSI-Modell Schicht 2) verzichten zu können wird ein zweigeteilter Frameaufbau verwendet.

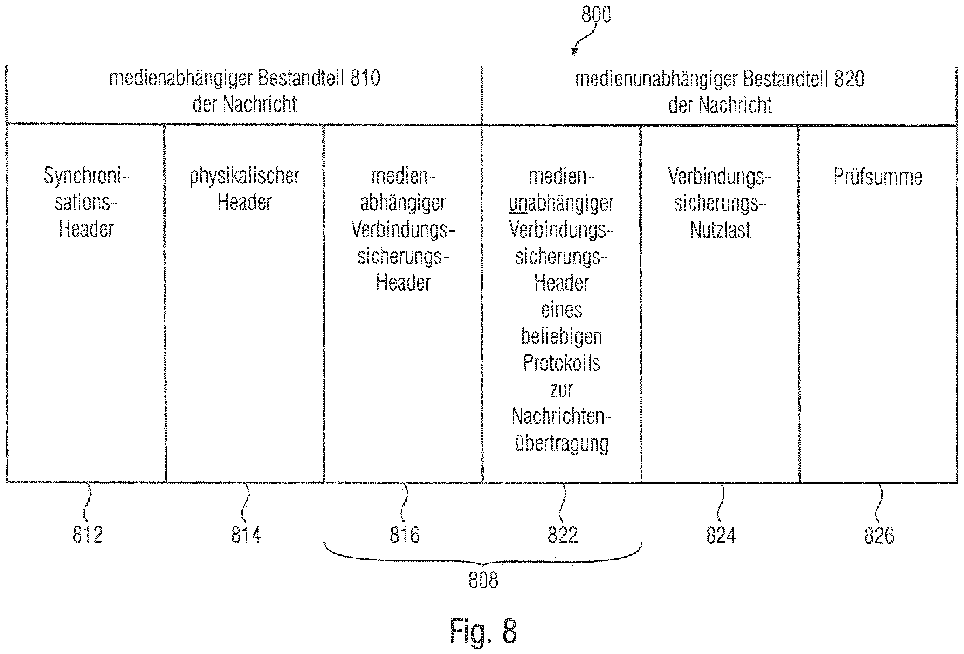

Fig. 8 zeigt ein Datenpaket (Frame) 800 gemäß einer weiteren Ausführungsform.

Das Datenpaket 800 weist als einen medienabhängigen Bestandteil 810 einen Synchronisations-Header 812, einen physikalischen Header 814 und einen medienabhängigen Verbindungssicherungs-Header 816 auf.

In einer Ausführungsform kommt der medienabhängige Verbindungssicherungs-Header 816 bei drahtgebundener Übertragung zum Einsatz und wird bei drahtloser Übertragung nicht verwendet.

Ferner weist das Datenpaket 800 als einen medienunabhängigen Bestandteil 820 einen medienunabhängigen Verbindungssicherungs-Header 822 eines beliebigen Protokolls zur Nachrichtenübertragung (z.B. IEEE 802.15.4), eine Verbindungssicherungs-Nutzlast 824 und eine Prüfsumme 826 auf.

Für den medienunabhängigen Bestandteil 820 gilt, dass beispielsweise je nach verwendetem Funkprotokoll welches für den medienunabhängigen Bestandteil der Nachricht verwendet wird, der Aufbau des medienunabhängigen Bestandteils der Nachricht abweichen kann.

Der medienabhängige Verbindungssicherungs-Header 816 und der medienunabhängige Verbindungssicherungs-Header 822 bilden zusammen den Verbindungssicherungs-Header 808.

Der erste Abschnitt des Datenpakets/Frames enthält also medienabhängige Nachrichtenfelder 810. Der zweite Abschnitt des Frames enthält dann die medienunabhängigen Nachrichtenfelder 820.

Die medienabhängigen Nachrichtenfelder 810 werden je nach verwendetem Kommunikationsmedium (z.B. Funk/Kupferkabel/Lichtwellenleiter) angepasst. Zu den medienabhängigen Nachrichtenfeldern 810 gehören somit in dem Ausführungsbeispiel der Fig. 8 der Synchronisations-Header 812 und der Physikalische-Header 814 sowie ein medienabhängiger Verbindungssicherungs-Header 816.

Der medienabhängige Verbindungssicherungs-Header 816 enthält beispielsweise nur ein einziges Feld, das oben beschriebene Typfeld 512. Dieses Typfeld enthält dann beispielsweise Informationen bezüglich des verwendeten Frame-Typs. Anhand des verwendeten Frame-Typs kann bestimmt werden ob es sich um einen Frame zur anwendungsbezogenen Datenübermittlung (z.B. Temperaturwerte eines Sensors) oder einen Frame zur Verwaltung des drahtgebundenen Netzwerks handelt. Frames zur anwendungsbezogenen Datenübermittlung können frei zwischen drahtlosem und drahtgebundenem Netzwerk ausgetauscht werden. Frames zur Verwaltung des drahtgebundenen Netzwerks werden nur innerhalb des drahtgebundenen Netzwerks weitergeleitet.

Zu den medienunabhängigen Nachrichtenfeldern 820 gehören typischerweise ein Verbindungssicherungs-Header 822, die Verbindungssicherungs-Nutzlast 824 und die Prüfsumme 826. Die medienunabhängigen Framefelder 820 können in Aufbau, Inhalt und Reihenfolge identisch zu den Framefeldern eines beliebigen drahtlosen Funkübertragungsprotokolls sein.

Ein Vorteil von Ausführungsformen gegenüber herkömmlichen Lösungen besteht darin, dass ohne eine Protokollumsetzung auf der Verbindungssicherungsschicht eine Kommunikation innerhalb des gesamten Netzwerks möglich ist, welches medienübergreifend sowohl drahtgebundene als auch drahtlose Kommunikationsknoten umfassen kann. Eine Protokoll- und Adressumsetzung wie bei herkömmlichen Lösungen durch ein Gateway oder eine Bridge ist nicht notwendig. Ein weiterer Vorteil ergibt sich dadurch, dass eine Verschlüsselung der Daten, wenn diese auf MAC oder Netzwerkprotokollebene (oder darüber liegenden Protokollschichten) erfolgt, unangetastet übernommen werden kann. Speziell eine Verschlüsselung auf MAC Layer würde ansonsten üblicherweise nur bis zum Punkt des Medienwechsels erfolgen können.

Gegenüber einer herkömmlichen Lösung zum Medienwechsel (Prolokollumselzung durch ein Gateway) ergeben sich durch das Wegfallen der Adressumsetzung und dem Wegfallen der Notwendigkeit zur Entschlüsselung und erneuten Verschlüsselung Vorteile in Hinblick auf kurze Latenzzeiten, zudem verringert sich der Konfigurations- und Verwaltungsaufwand.

Die technischen Anwendungsgebiete sind vielfältig.

Insbesondere im Bereich "Industrie 4.0"/ "Internet-of-Things" gibt es vielfältige Einsatzmöglichkeiten für ein Netzwerk welches medienübergreifend sowohl drahtgebundene als auch aus drahtlose Kommunikationsknoten umfassen kann ohne das eine Protokollumsetzung auf der Verbindungssicherungsschicht notwendig wird.

Besonders bei der Forderung nach einer einheitlichen Kommunikationstechnologie auf Basis von IPv6 ermöglicht diese Lösung eine Durchgängigkeit der Protokolle, um IP-Pakete ohne Protokollumsetzung zwischen Low Power Wireless Netzwerken über eine drahtgebunden Zweidrahtleitung direkt in IT- Glasfaserbackbones zu verschicken und zu adressieren.

Zum Aufbau eines umfassenden, auf dem Internet Protokoll basierenden, Kommunikationsnetzwerks ist die medium-übergreifende Durchgängigkeit der Protokolle ein großer Vorteil, da bis auf das physikalische Interface sowohl drahtgebundene als auch drahtlose Knoten einen weitestgehend identische Protokollstack (Protokollstapel) verwenden können.

In einer Ausführungsform wird ein Feldbus für das Internet der Dinge (englisch: Internet of Things; kurz: loT) bereitgestellt. So erfordern Anwendungen im Internet der Dinge IP-Fähigkeit in jedem Kommunikationsknoten. Oft ist es nicht sinnvoll, die Knoten mittels Ethernet anzubinden. Im Gegensatz dazu tendieren drahtlose Technologien zur Unzuverlässigkeit.

In Ausführungsformen wird mit einem Internet-der-Dinge-Bus eine Technologie bereitgestellt, die eine Lücke im Internet-der-Dinge Kommunikationstechnologie-Portfolio schließt und die gleichzeitig IPv6-Fähigkeit bietet.

So werden für eine neue Stufe des Internets der Dinge und des Internets der Energie (englisch: Internet of Energy; kurz: IoE) Lösungen benötigt, die universelle Internet-Protokoll-(kurz: IP)-Fähigkeit gerade für die Endknoten sicherstellen, wobei eine einfache Implementierung und universelle Einsatzfähigkeit sichergestellt sein soll. Mit dem zunehmenden Trend zur Verknüpfung und Digitalisierung im Energie- und Industriesektor und in der Industrie 4.0, wird die IP Fähigkeit im Endknoten immer wichtiger. Dabei sind insbesondere die strengen Anforderungen des Internets der Dinge an Datenrate, Reichweite und Verlässlichkeit, Flexibilität, Interoperabilität (siehe [1]) und teilweise Sicherheit der Daten zu erfüllen. Konsistenz der Protokolle und übergangsloser Datenfluss zwischen unterschiedlichen Netzwerken ist wesentlich für das Internet der Dinge.

Um die angestrebte Verlässlichkeit des Datenaustausches und der Steuerprozesse zu gewährleisten, ist in manchen Bereichen eine drahtgebundene Kommunikation bevorzugt, besonders in Umgebungen mit Interferenzen. Drahtgebundene Kommunikation kann auch große Reichweiten realisieren, ohne dass ein Einsatz von Multi-Hopping Technologie erforderlich wäre (hopping: englisch für: Hüpfen).

Mit dem IoT-Bus wird dabei ein Kommunikationsprotokoll bereitgestellt, das die Vorteile des Internets und der Internet Protokolle mit den Vorteilen eines Feldbusses kombiniert, was die Reichweite, Verlässlichkeit, Robustheit und geringe Latenz betrifft. Der loT-Bus kann dabei beispielsweise zur drahtgebundenen Verbindung von Sensoren und Aktuatoren eingesetzt werden, wobei Netzwerktechnik für die Systemkomponenten bereitgestellt wird.

Um mit existierenden Internet-Technologien kompatibel zu sein, und um Verlässlichkeit, Leistung und Interoperabilität zu gewährleisten, werden existierende Standards integriert, wobei IP Kommunikation mittels einer Bustechnologie realisiert wird.

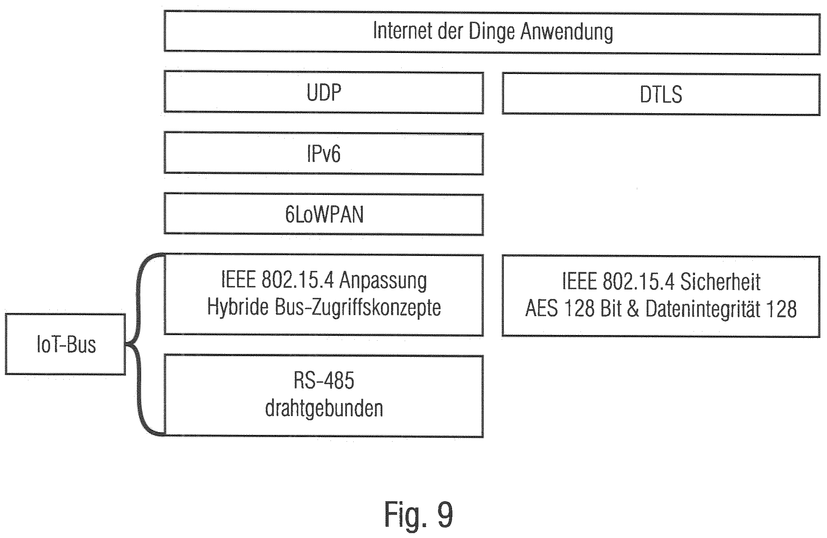

Fig. 9 zeigt ein Schichtenmodell für einen loT-Bus gemäß einer Ausführungsform. Der loT-Bus baut auf dem IEEE Standard 802.15.4 und auf IPv6 over Low power Wireless Personal Area Networks (6LoWPAN) auf (deutsch: IPv6 für WPAN mit niedrigem Energieverbrauch).

Um Kompatibilität mit IPv6-(Internet Protokoll Version 6)-Header-Kompression zu gewährleisten, während gleichzeitig Bustechnologie eingesetzt wird, wurde das IEEE Standard 802.15.4 Protokoll modifiziert. Dazu wurde der Medium Access Control (MAC; deutsch; sinngemäß: Sicherungsschicht)-Protokoll-Header um Medien-Zugriffs- und Bus-Verwaltungs-Information ergänzt. Dazu wurden zwei Bus-Zugriffs-Konzepte realisiert, nämlich ein stochastischer und ein deterministischer Bus-Zugriff. Beide wurden in einem hybriden Bus-Zugriff kombiniert, wobei Zeitschlitz-Variation verwendet wurde. Daneben wurden weitere Datenpaketen (Frames) für die Medien-Zugriffskontrolle und die Busverwallung hinzugefügt. Das Übertragungsmedium wurde durch einen leitungsgebundenen Kommunikationskanal unter Einsatz von RS-485 oder EIA-485 Transceivern ersetzt, wobei die ursprüngliche IEEE Standard 802.15.4-MAC-Paket/Rahmen-Struktur erhalten bleibt.

In Ausführungsformen wird IPv6 Header-Kompressionstechnologie eingesetzt, um IPv6 Fähigkeit bei begrenzter Bandbreite zu realisieren. Wie in anderen Kommunikationstechnologien, die auf dem IEEE Standard 802.15.4 basieren, wie beispielsweise ZigBee IP (siehe [2]), wird auch 6LoWPAN dafür eingesetzt, um benötigte IPv6 Fähigkeit in begrenzten Kommunikationskanälen zu realisieren (siehe [3] und [4]). 6LoWPAN wurde ursprünglich dafür entwickelt IPv6 Datagramme über begrenzte drahtlose Verbindungen zu realisieren (siehe [3]), wobei begrenzte Bandbreite, Speicher oder Energieressourcen von IEEE Standard 802.15.4 Netzen berücksichtigt wurden (siehe [3] und [5]). Die Vermittlung innerhalb des Netzwerks wird dabei über das IPv6 Protokoll realisiert.

In Ausführungsformen wird als Transportschicht dabei beispielsweise das UDP (User Datagram Protocol; deutsch: Nutzer Datagramm Protokoll) verwendet. Auf Anwendungsschicht-Ebene wird beispielsweise CoAP (Constrained Application Protocol; deutsch: beschränktes Anwendungsprotokoll) oder MQTT (Message Queue Telemetry Transport; deutsch: Nachrichtenschlangen-Telemetrie-Transport) oder OPC-UA (Open Platform Communications Unified Architecture; deutsch: Vereinheitlichte offene Plattformkommunikations-Architektur) eingesetzt.

Für loT Anwendungen ist eine zuverlässige und sichere Kommunikation erforderlich. Der IEEE Standard 802.15.4 sichert Datenintegrität mittels Signaturverfahren (kryptografische Verfahren). Ferner unterstützt der IEEE Standard 802.15.4 Verifikation und Sicherheitsmaßnahmen durch Checksummenverfahren und Datenpaketbestätigungen (siehe [6]). Datagram Transport Layer Security (DTLS) (deutsch: Datagramm Transportschicht Sicherheit) kann als ein zusätzlicher Sicherheitsmechanismus innerhalb der Sicherungsschicht (innerhalb des Data Link Layers) eingesetzt werden (siehe [7]).

Durch die Verwendung und Anpassung des IEEE Standards 802.15.4 stellt der loT-Bus ein medienübergreifendes Kommunikationsprotokoll innerhalb der Sicherungsschicht dar und vereint Wireless Personal Area Networks (WPAN) (deutsch: drahtlose persönliche Netzwerke) und Feldbusse, ohne dass komplexe Protokollumsetzung erforderlich wäre. Die Konsistenz der Protokolle erlaubt übergangslose Kommunikation unter Verwendung von drahtgebundenen loT-Bussen, sowie von drahtlosen kommerziellen Funkknoten, die dem IEEE Standard 802.15.4 entsprechen, ohne dass ein zusätzliches Gateway erforderlich wäre.

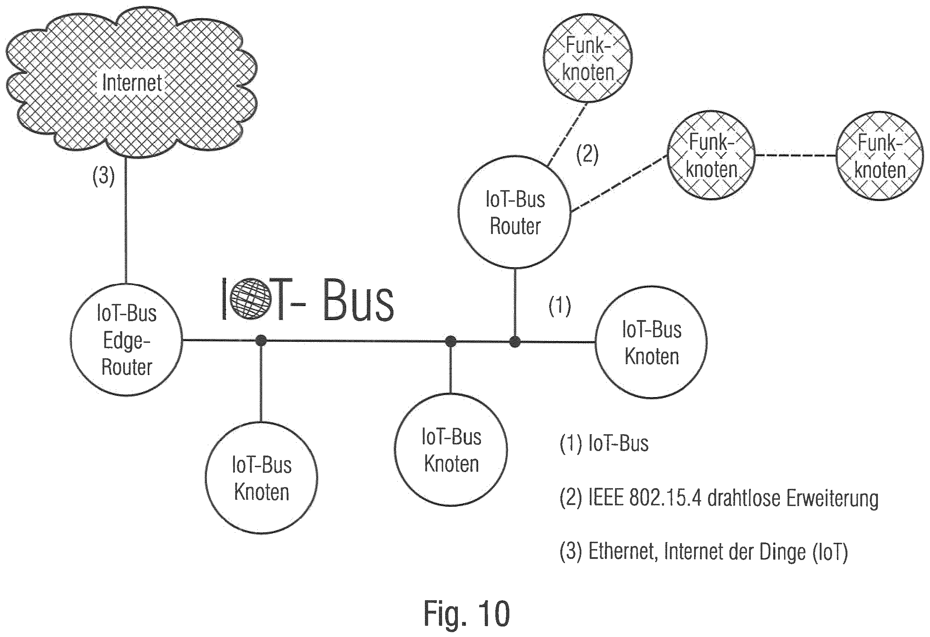

Fig. 10 zeigt eine Kommunikationsstruktur gemäß einer Ausführungsform. Die Kommunikationsstruktur der Fig. 10 umfasst bis zu drei unterschiedliche Segmente, nämlich den eigentlichen loT-Bus basierend auf dem IEEE Standard 802.15.4 mit einem angepassten Medienzugriffs-Konzept, eine optionale drahtlose Erweiterung um IEEE Standard 802.15.4 Funkknoten und eine Internetverbindung.

Beispielsweise kann der loT-Bus im Rahmen eines Steuersystems für einen Gleichstromverteilnetz eingesetzt werden, z.B. für die Interaktion einer Steuereinheit mit Spannungskonvertern, mit Verbrauchern, mit einem Photovoltaiksystem und zum Datenaustausch.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software oder zumindest teilweise in Hardware oder zumindest teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Referenzen:

[1] MCKINSEY GLOBAL INSTITUTE The Internet of Things: Mapping the Value behind the hype, Seite 21, 2015
[2] ZigBee IP Specification, Februar 2013.
[3] Ed. J. Hui und P. Thubert. Compression Format for IPv6 Datagrams over IEEE 802.15.4-Based Networks, September 2011.
[4] Jonas Olsson. 6LoWPAN demystified, 2014.
[5] Jonathan W. Hui und David E. Culler. IPv6 in Low-Power Wireless Networks. Proceedings of the IEEE, 98(11):1865-1878, 2010.
[6] David Gascón. Security in 802.15.4 and ZigBee networks, 2009.
[7] E. Rescorla und N. Modadugu. Datagram Transport Layer Security Version 1.2, Januar 2012.

## Patentansprüche

1. Vorrichtung (100) zur Datenübertragung in Kommunikationsnetzen, wobei die Kommunikationsnetze ein erstes Kommunikationsnetz und ein zweites Kommunikationsnetz umfassen, wobei die Vorrichtung zur Weiterleitung eines Nutzdatenfelds aus dem ersten Kommunikationsnetz in das zweite Kommunikationsnetz ausgebildet ist, wobei die Vorrichtung (100) umfasst:
eine erste Schnittstelle (110), die ausgebildet ist, ein Datenpaket, von dem ersten Kommunikationsnetz zu empfangen, wobei das Datenpaket einen Datenpaket-Header und das Nutzdatenfeld umfasst, wobei der Datenpaket-Header ein Typfeld aufweist, und
eine zweite Schnittstelle (120), die ausgebildet ist, das Nutzdatenfeld über das zweite Kommunikationsnetz zu übertragen, wenn das Typfeld einen Datenwert aufweist, der von einem ersten Datenwert verschieden ist, und wobei die zweite Schnittstelle (120) ausgebildet ist, das Nutzdatenfeld nicht über das zweite Kommunikationsnetz zu übertragen, wenn das Typfeld den ersten Datenwert aufweist;
**dadurch gekennzeichnet, dass**
das Datenpaket, wenn das Typfeld den ersten Datenwert aufweist, eir Datenpaket zur Verwaltung des ersten Kommunikationsnetzes ist, und wobei die zweite Schnittstelle (120) ausgebildet ist, das Datenpaket nicht über das zweite Kommunikationsnetz zu übertragen, wenn das Datenpaket ein Datenpaket zur Verwaltung des ersten Kommunikationsnetzes ist; oder
das Typfeld des Datenpaket-Headers genau ein Bit umfasst, wobei die zweite Schnittstelle (120) ausgebildet ist, das Nutzdatenfeld über das zweite Kommunikationsnetz zu übertragen, wenn das Typfeld einen zweiten Datenwert aufweist, die von dem ersten Datenwert verschieden sind, und wobei die zweite Schnittstelle (120) ausgebildet ist, das Nutzdatenfeld nicht über das zweite Kommunikationsnetz zu übertragen, wenn das Typfeld den ersten Datenwert aufweist; oder
das Datenpaket ein empfangenes Datenpaket ist, wobei der Datenpaket-Header des empfangenen Datenpakets einen medienabhängigen Teil und einen medienunabhängigen Teil aufweist, wobei der medienabhängige Teil das Typfeld umfasst, wobei die zweite Schnittstelle (120) ausgebildet ist, wenn das Typfeld einen Datenwert aufweist, der von dem ersten Datenwert verschieden ist, ein umgeformtes Datenpaket zu bilden und über das zweite Kommunikationsnetz zu übertragen, wobei das umgeformte Datenpaket den medienunabhängigen Teil des Datenpaket-Headers des empfangenen Datenpakets und das Nutzdatenfeld des empfangenen Datenpakets umfasst, aber nicht den medienabhängigen Teil des Datenpaket-Headers des empfangenen Datenpakets umfasst, wobei das empfangene Datenpaket ferner ein oder mehrere Prüfbits umfasst, wobei die zweite Schnittstelle (120) ausgebildet ist, wenn das Typfeld einen Datenwert aufweist, der von dem ersten Datenwert verschieden ist, das umgeformte Datenpaket so zu bilden, dass das umgeformte Datenpaket die ein oder mehreren Prüfbits des empfangenen Datenpakets als ein oder mehrere Prüfbits des umgeformten Datenpakets umfasst, ohne den Wert der ein oder mehreren Prüfbits in dem umgeformten Datenpaket im Vergleich zu den ein oder mehreren Prüfbits des empfangenen Datenpakets zu verändern, wobei der medienabhängige Teil von einem verwendeten Kommunikationsmedium von wenigstens einem der Kommunikationsnetze abhängig ist, und wobei der medienunabhängige Teil nicht von diesem abhängig ist; oder
das Datenpaket ein empfangenes Datenpaket ist, wobei der Datenpaket-Header des empfangenen Datenpakets einen medienabhängigen Teil und einen medienunabhängigen Teil aufweist, wobei der medienabhängige Teil das Typfeld umfasst, wobei die zweite Schnittstelle (120) ausgebildet ist, wenn das Typfeld einen Datenwert aufweist, der von dem ersten Datenwert verschieden ist, ein umgeformtes Datenpaket zu bilden und über das zweite Kommunikationsnetz zu übertragen, wobei das umgeformte Datenpaket den medienunabhängigen Teil des Datenpaket-Headers des empfangenen Datenpakets und das Nutzdatenfeld des empfangenen Datenpakets umfasst, aber nicht den medienabhängigen Teil des Datenpaket-Headers des empfangenen Datenpakets umfasst, wobei der medienunabhängige Teil des Datenpaket-Headers des empfangenen Datenpakets ein Datenpaket-Header gemäß IEEE 802.15.4 ist, und wobei die zweite Schnittstelle (120) ausgebildet ist, wenn das Typfeld einen Datenwert aufweist, der von dem ersten Datenwert verschieden ist, das umgeformte Datenpaket so zu bilden, dass das umgeformte Datenpaket den medienunabhängige Teil des Datenpaket-Headers des empfangenen Datenpakets als einen Datenpaket-Header gemäß IEEE 802.15.4 umfasst, wobei der medienabhängige Teil von dem verwendeten Kommunikationsmedium von wenigstens einem der Kommunikationsnetze abhängig ist, und wobei der medienunabhängige Teil nicht von diesem abhängig ist.

2. Vorrichtung (100) nach Anspruch 1,
wobei das Nutzdatenfeld des empfangenen Datenpakets ein verschlüsseltes Nutzdatenfeld ist,
wobei die zweite Schnittstelle (120) ausgebildet ist, wenn das Typfeld einen Datenwert aufweist, der von dem ersten Datenwert verschieden ist, ohne das verschlüsselte Nutzdatenfeld zu entschlüsseln, das umgeformte Datenpaket so zu bilden, dass das umgeformte Datenpacket das verschlüsselte Datenfeld umfasst.

3. Vorrichtung (100) nach Anspruch 1 oder 2,
wobei der medienunabhängige Teil des Datenpaket-Headers ein verschlüsselter medienunabhängiger Teil des Datenpaket-Headers ist,
wobei die zweite Schnittstelle (120) ausgebildet ist, wenn das Typfeld einen Datenwert aufweist, der von dem ersten Datenwert verschieden ist, den verschlüsselten medienunabhängigen Teil des Datenpaket-Headers zu entschlüsseln, um entschlüsselte Header-Information zu erhalten, die eine Zieladresse umfasst, des Weiteren das umgeformte Datenpaket so zu bilden, dass das umgeformte Datenpaket den verschlüsselten medienunabhängigen Teil des Datenpaket-Headers umfasst, ohne die entschlüsselte Header-Information erneut zu verschlüsseln, und des Weiteren, in Abhängigkeit vor der Zieladresse, das umgeformte Datenpaket über das zweite Kommunikationsnetz zu einem Ziel zu übertragen, wobei der medienunabhängige Teil nicht von dem verwendeten Kommunikationsmedium abhängig ist.

4. Vorrichtung (100) nach einem der vorherigen Ansprüche,
wobei der medienunabhängige Teil nicht von dem verwendeten Kommunikationsmedium abhängig ist;
wobei der medienunabhängige Teil des Datenpaket-Headers des empfangenen Datenpakets ein Netzzugangsschicht-Header einer Netzzugangsschicht des TCP/IP-Protokollstapels ist, und wobei die zweite Schnittstelle (120) ausgebildet ist, wenn das Typfeld einen Datenwert aufweist, der von dem ersten Datenwert verschieden ist, das umgeformtes Datenpaket so zu bilden, dass das umgeformte Datenpaket den medienunabhängigen Teil des Datenpaket-Headers des empfangenen Datenpakets als Netzzugangsschicht-Header der Netzzugangsschicht des TCP/IP-Protokollstapels in dem umgeformten Datenpaket zu belassen, oder
wobei der medienunabhängige Teil des Datenpaket-Headers des empfangenen Datenpakets ein Sicherungsschicht-Header einer Sicherungsschicht des ISO/OSI-Modell-Protokollstapels ist, und wobei die zweite Schnittstelle (120) ausgebildet ist, wenn das Typfeld einen Datenwert aufweist, der von dem ersten Datenwert verschieden ist, das umgeformtes Datenpaket so zu bilden, dass das umgeformte Datenpaket den medienunabhängigen Teil des Datenpaket-Headers des empfangenen Datenpakets als Sicherungsschicht-Header der Sicherungsschicht des ISO/OSI-Modell-Protokollstapels in dem umgeformten Datenpaket zu belassen.

5. Vorrichtung (200) zur Erzeugung und Übertragung eines Datenpakets in Kommunikationsnetzen, wobei die Kommunikationsnetze ein erstes Kommunikationsnetz und ein zweites Kommunikationsnetz umfassen, wobei die Vorrichtung (200) umfasst:
eine Erzeugungseinheit (210), die ausgebildet ist das Datenpaket zu erzeugen, so dass das Datenpaket, einen Datenpaket-Header und ein Nutzdatenfeld umfasst, wobei der Datenpaket-Header ein Typfeld aufweist, und
eine Schnittstelle (220), die ausgebildet ist, das Datenpaket über das erste Kommunikationsnetz zu einer Empfangsvorrichtung zu übertragen,
wobei die Erzeugungseinheit (210) ausgebildet ist, das Datenpaket so zu erzeugen, dass das Typfeld einen ersten Datenwert aufweist, wenn das Nutzdatenfeld des Datenpakets nicht von der Empfangsvorrichtung über das zweite Kommunikationsnetz übertragen werden sollen, und wobei die Erzeugungseinheit (210) ausgebildet ist, das Datenpaket so zu erzeugen, dass das Typfeld einen Datenwert aufweist, der von dem ersten Datenwert verschieden ist, wenn das Nutzdatenfeld des Datenpakets von der Empfangsvorrichtung über das zweite
Kommunikationsnetz übertragen werden sollen;
**dadurch gekennzeichnet, dass**
die Erzeugungseinheit (210) ausgebildet ist, das Datenpaket so zu erzeugen, dass das Typfeld den ersten Datenwert aufweist, wenn das Datenpaket ein Datenpaket zur Verwaltung des ersten Kommunikationsnetzes ist, und wobei die Erzeugungseinheit (210) ausgebildet ist, das Datenpaket so zu erzeugen, dass das Typfeld einen Datenwert aufweist, der von dem ersten Datenwert verschieden ist, wenn das Datenpaket nicht ein Datenpaket zur Verwaltung des ersten Kommunikationsnetzes ist; oder
die Erzeugungseinheit (210) ausgebildet ist, das Typfeld des Datenpaket-Headers so zu bilden, dass das Typfeld des Datenpaket-Headers genau ein Bit umfasst, wobei die Erzeugungseinheit (210) ausgebildet ist, das Datenpaket so zu erzeugen, dass das Typfeld den ersten Datenwert aufweist, wenn das Nutzdatenfeld des Datenpakets nicht von der Empfangsvorrichtung über das zweite Kommunikationsnetz übertragen werden sollen, und wobei die Erzeugungseinheit (210) ausgebildet ist, das Datenpaket so zu erzeugen, dass das Typfeld einen zweiten Datenwert aufweist, der von dem ersten Datenwert verschieden ist, wenn das Nutzdatenfeld des Datenpakets nicht von der Empfangsvorrichtung über das zweite Kommunikationsnetz übertragen werden sollen; oder
die Erzeugungseinheit (210) ausgebildet ist, den Datenpaket-Header des Datenpakets so zu bilden, dass der Datenpaket-Header einen medienabhängigen Teil und einen medienunabhängigen Teil aufweist, wobei die Erzeugungseinheit (210) ausgebildet ist, den medienabhängigen Teil des Datenpaket-Headers so zu bilden, dass der medienabhängige Teil das Typfeld umfasst, und wobei die Erzeugungseinheit (210) ausgebildet ist, das Datenpaket so zu bilden, dass das Datenpaket ferner ein oder mehrere Prüfbits umfasst, wobei die Erzeugungseinheit (210) ausgebildet ist, die ein oder mehreren Prüfbits basierend auf dem medienunabhängigen Teil des Datenpaket-Headers des Datenpakets und basierend auf dem Nutzdatenfeld des Datenpakets, aber nicht basierend auf dem medienabhängigen Teil des Datenpaket-Headers des Datenpakets zu bestimmen, wobei der medienabhängige Teil von einem verwendeten Kommunikationsmedium von wenigstens einem der Kommunikationsnetze abhängig ist, und wobei der medienunabhängige Teil nicht von diesem abhängig ist.

6. Vorrichtung (200) nach Anspruch 5, wobei die Erzeugungseinheit (210) ausgebildet ist, das Datenpaket so zu bilden, dass das Datenpaket das Nutzdatenfeld als ein verschlüsseltes Nutzdatenfeld in verschlüsselter Form umfasst.

7. Vorrichtung (200) nach Anspruch 5 oder 6, wobei die Erzeugungseinheit (210) ausgebildet ist, den Datenpaket-Header des Datenpakets so zu bilden, dass der Datenpaket-Header den medienunabhängigen Teil des Datenpaket-Headers als einen verschlüsselten medienunabhängigen Teil des Datenpaket-Headers in verschlüsselter Form umfasst, wobei der medienunabhängige Teil nicht von dem verwendeten Kommunikationsmedium abhängig ist.

8. Vorrichtung (200) nach einem der Ansprüche 5 bis 7,
wobei der medienunabhängige Teil nicht von dem verwendeten Kommunikationsmedium abhängig ist;
wobei die Erzeugungseinheit (210) ausgebildet ist, den Datenpaket-Header des Datenpakets so zu bilden, dass der medienunabhängige Teil des Datenpaket-Headers des Datenpakets ein Netzzugangsschicht-Header einer Netzzugangsschicht des TCP/IP-Protokollstapels ist, oder
wobei die Erzeugungseinheit (210) ausgebildet ist, den Datenpaket-Header des Datenpakets so zu bilden, dass der medienunabhängige Teil des Datenpaket-Headers des Datenpakets ein Sicherungsschicht-Header einer Sicherungsschicht des ISO/OSI-Modell-Protokollstapels ist.

9. System zur Erzeugung und Übertragung eines Datenpakets über ein erstes Kommunikationsnetz und zur Weiterleitung eines Nutzdatenfelds des Datenpakets aus dem ersten Kommunikationsnetz in zweites Kommunikationsnetz, wobei das System umfasst:
eine Vorrichtung (200) nach einem der Ansprüche 5 bis 8 zur Erzeugung des Datenpakets, und
eine Vorrichtung (100) nach einem der Ansprüche 1 bis 4 zur Weiterleitung des Nutzdatenfelds des Datenpakets über das zweite Kommunikationsnetz,
wobei die Vorrichtung (200) nach einem der Ansprüche 5 bis 8 ausgebildet ist, das Datenpaket über das erste Kommunikationsnetz zur Vorrichtung nach einem der Ansprüche 1 bis 9 zu übertragen,
wobei die Vorrichtung (100) nach einem der Ansprüche 1 bis 4 ausgebildet ist, das Datenpaket von der Vorrichtung (200) nach einem der Ansprüche 5 bis 8 zu empfangen,
wobei die Vorrichtung (100) nach einem der Ansprüche 1 bis 4 ausgebildet ist, das Nutzdatenfeld über das zweite Kommunikationsnetz zu übertragen, wenn ein Typfeld eines Datenpaket-Headers des Datenpakets einen Datenwert aufweist, der von einem ersten Datenwert verschieden ist, und
wobei die Vorrichtung (100) nach einem der Ansprüche 1 bis 4 ausgebildet ist, das Nutzdatenfeld nicht über das zweite Kommunikationsnetz zu übertragen, wenn das Typfeld des Datenpaket-Headers des Datenpakets den ersten Datenwert aufweist.

10. Datenpaket (500; 800) für die Datenübertragung in Kommunikationsnetzen, wobei die Kommunikationsnetze ein erstes Kommunikationsnetz und ein zweites Kommunikationsnetz umfassen, wobei das Datenpaket (500; 800) zur Übertragung eines Nutzdatenfelds (550; 824) über das erste Kommunikationssetz zu einer Empfangsvorrichtung ausgebildet ist, wobei das Datenpaket (500; 800) umfasst:
einen Datenpaket-Header (510; 808) und
das Nutzdatenfeld (550; 824),
wobei der Datenpaket-Header (510; 808) ein Typfeld (512) aufweist, und
wobei das Typfeld (512) einen ersten Datenwert aufweist, wenn das Nutzdatenfeld (550; 824) des Datenpakets (500; 800) nicht von der Empfangsvorrichtung über das zweite Kommunikationsnetz übertragen werden sollen, und
wobei das Typfeld (512) einen Datenwert aufweist, der von dem ersten Datenwert verschieden ist, wenn das Nutzdatenfeld (550; 824) des Datenpakets (500; 800) von der Empfangsvorrichtung über das zweite Kommunikationsnetz übertragen werden sollen;
**dadurch gekennzeichnet, dass**
der Datenpaket-Header (510; 808) einen medienabhängigen Teil (511; 816) und einen medienunabhängigen Teil (514; 822) aufweist,
wobei der medienabhängige Teil (511; 816) das Typfeld (512) umfasst, und
wobei das Datenpaket (500; 800) ferner ein oder mehrere Prüfbits (560; 826) umfasst,
wobei die ein oder mehreren Prüfbits (560; 826) von dem medienunabhängigen Teil (514; 822) des Datenpaket-Headers (510; 808) des Datenpakets (500; 800) abhängen und von dem Nutzdatenfeld (550; 824) des Datenpakets (500; 800) abhängen, aber nicht von dem medienabhängigen Teil (511; 816) des Datenpaket-Headers (510; 808) des Datenpakets (500; 800) abhängen, wobei der medienabhängige Teil von einem verwendeten Kommunikationsmedium von wenigstens einem der Kommunikationsnetze abhängig ist, und wobei der medienunabhängige Teil nicht von diesem abhängig ist.

11. Datenpaket (500; 800) nach Anspruch 10, wobei das Datenpaket (500; 800) das Nutzdatenfeld (550; 824) als ein verschlüsseltes Nutzdatenfeld in verschlüsselter Form umfasst.

12. Datenpaket (500; 800) nach Anspruch 10 oder 11, wobei der Datenpaket-Header (510; 808) den medienunabhängigen Teil (514; 822) als einen verschlüsselten medienunabhängigen Teil in verschlüsselter Form umfasst, wobei der medienunabhängige Teil nicht von dem verwendeten Kommunikationsmedium abhängig ist.

13. Verfahren zur Datenübertragung in Kommunikationsnetzen, wobei die Kommunikationsnetze ein erstes Kommunikationsnetz und ein zweites Kommunikationsnetz umfassen, wobei ein Nutzdatenfeld aus dem ersten Kommunikationsnetz in das zweite Kommunikationsnetz weitergeleitet wird, wobei das Verfahren umfasst:
Empfangen eines Datenpakets, von dem ersten Kommunikationsnetz, wobei das Datenpaket einen Datenpaket-Header und das Nutzdatenfeld umfasst, wobei der Datenpaket-Header ein Typfeld aufweist,
Übertragen des Nutzdatenfelds über das zweite Kommunikationsnetz, wenn das Typfeld einen Datenwert aufweist, der von einem ersten Datenwert verschieden ist, und kein Übertragen des Nutzdatenfelds über das zweite Kommunikationsnetz, wenn das Typfeld den ersten Datenwert aufweist;
**dadurch gekennzeichnet, dass**
das Datenpaket, wenn das Typfeld den ersten Datenwert aufweist, eir Datenpaket zur Verwaltung des ersten Kommunikationsnetzes ist, und wobei das Datenpaket nicht über das zweite Kommunikationsnetz übertragen wird, wenn das Datenpaket ein Datenpaket zur Verwaltung des ersten Kommunikationsnetzes ist; oder
das Typfeld des Datenpaket-Headers genau ein Bit umfasst, wobei das Nutzdatenfeld über das zweite Kommunikationsnetz übertragen wird, wenn das Typfeld einen zweiten Datenwert aufweist, die von dem ersten Datenwert verschieden sind, und wobei das Nutzdatenfeld nicht über das zweite Kommunikationsnetz übertragen wird, wenn das Typfeld den ersten Datenwert aufweist; oder
das Datenpaket ein empfangenes Datenpaket ist, wobei der Datenpaket-Header des empfangenen Datenpakets einen medienabhängigen Teil und einen medienunabhängigen Teil aufweist, wobei der medienabhängige Teil das Typfeld umfasst, wobei, wenn das Typfeld einen Datenwert aufweist, der von dem ersten Datenwert verschieden ist, ein umgeformtes Datenpaket gebildet wird und über das zweite Kommunikationsnetz zu übertragen wird, wobei das umgeformte Datenpaket den medienunabhängigen Teil des Datenpaket-Headers des empfangenen Datenpakets und das Nutzdatenfeld des empfangenen Datenpakets umfasst, aber nicht den medienabhängigen Teil des Datenpaket-Headers des empfangenen Datenpakets umfasst, wobei das empfangene Datenpaket ferner ein oder mehrere Prüfbits umfasst, wobei, wenn das Typfeld einen Datenwert aufweist, der von dem ersten Datenwert verschieden ist, das umgeformte Datenpaket so gebildet wird, dass das umgeformte Datenpaket die ein oder mehreren Prüfbits des empfangenen Datenpakets als ein oder mehrere Prüfbits des umgeformten Datenpakets umfasst, ohne den Wert der ein oder mehreren Prüfbits in dem umgeformten Datenpaket im Vergleich zu den ein oder mehreren Prüfbits des empfangenen Datenpakets zu verändern, wobei der medienabhängige Teil von einem verwendeten Kommunikationsmedium von wenigstens einem der Kommunikationsnetze abhängig ist, und wobei der medienunabhängige Teil nicht von diesem abhängig ist; oder
das Datenpaket ein empfangenes Datenpaket ist, wobei der Datenpaket-Header des empfangenen Datenpakets einen medienabhängigen Teil und einen medienunabhängigen Teil aufweist, wobei der medienabhängige Teil das Typfeld umfasst, wobei, wenn das Typfeld einen Datenwert aufweist, der von dem ersten Datenwert verschieden ist, ein umgeformtes Datenpaket gebildet wird und über das zweite Kommunikationsnetz übertragen wird, wobei das umgeformte Datenpaket den medienunabhängigen Teil des Datenpaket-Headers des empfangenen Datenpakets und das Nutzdatenfeld des empfangenen Datenpakets umfasst, aber nicht den medienabhängigen Teil des Datenpaket-Headers des empfangenen Datenpakets umfasst, wobei der medienunabhängige Teil des Datenpaket-Headers des empfangenen Datenpakets ein Datenpaket-Header gemäß IEEE 802.15.4 ist, und wobei, wenn das Typfeld einen Datenwert aufweist, der von dem ersten Datenwert verschieden ist, das umgeformte Datenpaket so gebildet wird, dass das umgeformte Datenpaket den medienunabhängige Teil des Datenpaket-Headers des empfangenen Datenpakets als einen Datenpaket-Header gemäß IEEE 802.15.4 umfasst, wobei der medienabhängige Teil von dem verwendeten Kommunikationsmedium von wenigstens einem der Kommunikationsnetze abhängig ist, und wobei der medienunabhängige Teil nicht von diesem abhängig ist.

14. Verfahren zur Erzeugung und Übertragung eines Datenpakets in Kommunikationsnetzen, wobei die Kommunikationsnetze ein erstes Kommunikationsnetz und ein zweites Kommunikationsnetz umfassen, wobei das Verfahren umfasst:
Erzeugen des Datenpakets, so dass das Datenpaket, einen Datenpaket-Header und ein Nutzdatenfeld umfasst, wobei der Datenpaket-Header ein Typfeld aufweist, und
Übertragen des Datenpakets über das erste Kommunikationsnetz zu einer Empfangsvorrichtung,
wobei das Datenpaket so erzeugt wird, dass das Typfeld einen ersten Datenwert aufweist, wenn das Nutzdatenfeld des Datenpakets nicht von der Empfangsvorrichtung über das zweite Kommunikationsnetz übertragen werden sollen, und wobei das Datenpaket so erzeugt wird, dass das Typfeld einen Datenwert aufweist, der von dem ersten Datenwert verschieden ist, wenn das Nutzdatenfeld des Datenpakets von der Empfangsvorrichtung über das zweite Kommunikationsnetz übertragen werden sollen;
**dadurch gekennzeichnet, dass**
das Datenpaket so erzeugt wird, dass das Typfeld den ersten Datenwert aufweist, wenn das Datenpaket ein Datenpaket zur Verwaltung des ersten Kommunikationsnetzes ist, und wobei das Datenpaket so erzeugt wird, dass das Typfeld einen Datenwert aufweist, der von dem ersten Datenwert verschieden ist, wenn das Datenpaket nicht ein Datenpaket zur Verwaltung des ersten Kommunikationsnetzes ist; oder
das Typfeld des Datenpaket-Headers so gebildet wird, dass das Typfeld des Datenpaket-Headers genau ein Bit umfasst, wobei das Datenpaket so erzeugt wird, dass das Typfeld den ersten Datenwert aufweist, wenn das Nutzdatenfeld des Datenpakets nicht von der Empfangsvorrichtung über das zweite Kommunikationsnetz übertragen werden sollen, und wobei das Datenpaket so erzeugt wird, dass das Typfeld einen zweiten Datenwert aufweist, der von dem ersten Datenwert verschieden ist, wenn das Nutzdatenfeld des Datenpakets nicht von der Empfangsvorrichtung über das zweite Kommunikationsnetz übertragen werden sollen; oder
der Datenpaket-Header des Datenpakets so gebildet wird, dass der Datenpaket-Header einen medienabhängigen Teil und einen medienunabhängigen Teil aufweist, wobei der medienabhängige Teil des Datenpaket-Headers so gebildet wird, dass der medienabhängige Teil das Typfeld umfasst, und wobei das Datenpaket so gebildet wird, dass das Datenpaket ferner ein oder mehrere Prüfbits umfasst, wobei die ein oder mehreren Prüfbits basierend auf dem medienunabhängigen Teil des Datenpaket-Headers des Datenpakets und basierend auf dem Nutzdatenfeld des Datenpakets, aber nicht basierend auf dem medienabhängigen Teil des Datenpaket-Headers des Datenpakets bestimmt werden, wobei der medienabhängige Teil von einem verwendeten Kommunikationsmedium von wenigstens einem der Kommunikationsnetze abhängig ist, und wobei der medienunabhängige Teil nicht von diesem abhängig ist.

15. Computerprogramm mit einem Programmcode zur Durchführung des Verfahrens nach Anspruch 13 oder 14, wenn das Computerprogramm auf einem Computer oder Signalprozessor ausgeführt wird.

## Claims

1. Apparatus (100) for transmitting data in communication networks, wherein the communication networks include a first communication network and a second communication network, wherein the apparatus is configured to forward a payload data field from the first communication network to the second communication network, the apparatus (100) comprising:
a first interface (110) that is configured to receive a data packet from the first communication network, wherein the data packet comprises a data packet header and a payload data field, wherein the data packet header comprises a type field and
a second interface (120) that is configured to transmit the payload data field via the second communication network when the type field comprises a data value differing from a first data value and wherein the second interface (120) is configured to not transmit the payload data field via the second communication network when the type field comprises the first data value;
**characterized in that**,
when the type field comprises the first data value, the data packet is a data packet for managing the first communication network and the second interface (120) is configured to not transmit the data packet via the second communication network when the data packet is a data packet for managing the first communication network; or
the type field of the data packet header comprises exactly one bit, wherein the second interface (120) is configured to transmit the payload data field via the second communication network when the type field comprises a second data value differing from the first data value and wherein the second interface (120) is configured to not transmit the payload data field via the second communication network when the type field comprises the first data value; or
the data packet is a received data packet, wherein the data packet header of the received data packet comprises a media-dependent part and a media-independent part, wherein the media-dependent part comprises the type field, and wherein, when the type field comprises a data value differing from the first data value, the second interface (120) is configured to form a converted data packet and to transmit the same via the second communication network, wherein the converted data packet comprises the media-independent part of the data packet header of the received data packet and the payload data field of the received data packet but not the media-dependent part of the data packet header of the received data packet, wherein the received data packet further comprises one or several check bits, wherein, when the type field comprises a data value differing from the first data value, the second interface (120) is configured to form the converted data packet such that the converted data packet comprises the one or several check bits of the received data packet as one or several check bits of the converted data packet without changing the value of the one or several check bits in the converted data packet compared to the one or several check bits of the received data packet, wherein the media-dependent part of a used communication medium is dependent from at least one of the communication networks, and wherein the media-independent part is not dependent from the same; or
the data packet is a received data packet, wherein the data packet header of the received data packet comprises a media-dependent part and a media-independent part, wherein the media-dependent part comprises the type field, and wherein, when the type field comprises a data value differing from the first data value, the second interface (120) is configured to form a converted data packet and to transmit the same via the second communication network, wherein the converted data packet comprises the media-independent part of the data packet header of the received data packet and the payload data field of the received data packet but not the media-dependent part of the data packet header of the received data packet, wherein the media-independent part of the data packet header of the received data packet is a data packet header according to IEEE 802.15.4 and wherein, when the type field comprises a data value differing from the first data value, the second interface (120) is configured to form the converted data packet such that the converted packet comprises the media-independent part of the data packet header of the received data packet as a data packet header according to IEEE 802.15.4, wherein the media-dependent part of a used communication medium is dependent from at least one of the communication networks, and wherein the media-independent part is not dependent from the same.

2. Apparatus (100) according to claim 1, wherein the payload data field of the received data packet is an encrypted payload data field,
wherein, when the type field comprises a data value differing from the first data value, the second interface (120) is configured to form the converted data packet without decrypting the encrypted payload data field, such that the converted data packet includes the encrypted data field.

3. Apparatus (100) according to claim 1 or 2,
wherein the media-independent part of the data packet header is an encrypted media-independent part of the data packet header,
wherein, when the type field comprises a data value differing from the first data value, the second interface (120) is configured to decrypt the encrypted media-independent part of the data packet header to obtain decrypted header information including a target address, further to form the converted data packet such that the converted data packet comprises the encrypted media-independent part of the data packet header without encrypting the decrypted header information again and further to transmit, in dependence on the target address, the converted data packet via the second communication network to a target, wherein the media-independent part is not dependent from the used communication medium.

4. Apparatus (100) according to any one of the preceding claims,
wherein the media-independent part is not dependent from the used communication medium;
wherein the media-independent part of the data packet header of the received data packet is a network access layer header of a network access layer of the TCP/IP protocol stack and wherein, when the type field comprises a data value differing from the first data value, the second interface (120) is configured to form the converted data packet such that the converted data packet leaves the media-independent part of the data packet header of the received data packet as network access layer header of the network access layer of the TCP/IP protocol stack within the converted data packet or
wherein the media-independent part of the data packet header of the received data packet is a data link layer of the ISO/OSI model protocol stack, and wherein, when the type field comprises a data value differing from the first data value, the second interface (120) is configured to form the converted data packet such that the converted data packet leaves the media-independent part of the data packet header of the received data packet as data link layer header of the data link layer of the ISO/OSI model protocol stack in the converted data packet.

5. Apparatus (200) for generating and transmitting a data packet in communication networks, wherein the communication networks include a first communication network and a second communication network, the apparatus (200) comprising:
a generating unit (210) that is configured to generate the data packet such that the data packet comprises a data packet header and a payload data field, wherein the data packet header comprises a type field and
an interface (220) that is configured to transmit the data packet via a first communication network to a receiving apparatus,
wherein the generating unit (210) is configured to generate the data packet such that the type field comprises a first data value when the payload data field of the data packet is not to be transmitted by the receiving apparatus via a second communication network and wherein the generating unit (210) is configured to generate the data packet such that the type field comprises a data value differing from the first data value when the payload data field of the data packet is to be transmitted by the receiving apparatus via the second communication network;
**characterized in that**
the generating unit (210) is configured to generate the data packet such that the type field comprises the first data value when the data packet is a data packet for managing the first communication network, and wherein the generating unit (210) is configured to generate the data packet such that the type field comprises a data value differing from the first data value, when the data packet is not a data packet for managing the first communication network; or
the generating unit (210) is configured to form the type field of the data packet header such that the type field of the data packet header includes exactly one bit, wherein the generating unit (210) is configured to generate the data packet such that the type field comprises the first data value when the payload data field of the data packet is not to be transmitted by the receiving apparatus via the second communication network, and wherein the generating unit (210) is configured to generate the data packet such that the type field comprises a second data value differing from the first data value when the payload data field of the data packet is not to be transmitted by the receiving apparatus via the second communication network; or
the generating unit (210) is configured to form the data packet header of the data packet such that the data packet header comprises a media-dependent part and a media-independent part, wherein the generating unit (210) is configured to form the media-dependent part of the data packet header such that the media-dependent part includes the type field, and wherein the generating unit (210) is configured to form the data packet such that the data packet further includes one or several check bits, wherein the generating unit (210) is configured to determine the one or several check bits based on the media-independent part of the data packet header of the data packet and based on the payload data field of the data packet but not based on the media-dependent part of the data packet header of the data packet, wherein the media-dependent part of a used communication medium is dependent from at least one of the communication networks, and wherein the media-independent part is not dependent from the same.

6. Apparatus (200) according to claim 5, wherein the generating unit (210) is configured to form the data packet such that the data packet includes the payload data field as encrypted payload data field in encrypted form.

7. Apparatus (200) according to claim 5 or 6, wherein the generating unit (210) is configured to form the data packet header of the data packet such that the data packet header comprises the media-independent part of the data packet header as an encrypted media-independent part of the data packet header in encrypted form, wherein the media-independent part is not dependent from the used communication medium

8. Apparatus (200) according to any one of claims 5 to 7,
wherein the media-independent part is not dependent from the used communication medium;
wherein the generating unit (210) is configured to form the data packet header of the data packet such that the media-independent part of the data packet header of the data packet is a network access layer header of a network access layer of the TCP/IP protocol stack or
wherein the generating unit (210) is configured to form the data packet header of the data packet such that the media-independent part of the data packet header of the data packet is a data link layer header of a data link layer of the ISO/OSI model protocol stack.

9. System for generating and transmitting a data packet via a first communication network and for forwarding a payload data field of the data packet from the first communication network into a second communication network, the system comprising:
an apparatus (200) according to any one of claims 5 to 8 for generating the data packet, and
an apparatus (100) according to any one of claims 1 to 4 for forwarding the payload data field of the data packet via the second communication network,
wherein the apparatus (200) according to any one of claims 5 to 8 is configured to transmit the data packet via the first communication network to the apparatus according to any one of claims 1 to 9,
wherein the apparatus (100) according to any one of claims 1 to 4 is configured to receive the data packet from the apparatus (200) according to any one of claims 5 to 8,
wherein the apparatus (100) according to any one of claims 1 to 4 is configured to transmit the payload data field via the second communication network when a type field of a data packet header of the data packet comprises a data value differing from a first data value and
wherein the apparatus (100) according to any one of claims 1 to 4 is configured to not transmit the payload data field via the second communication network when the type field of the data packet header of the data packet comprises the first data value.

10. Data packet (500; 800) for data transmission in communication networks, wherein the communication networks include a first communication network and a second communication network, wherein the data packet (500; 800) is configured to transmit a payload data field (550; 824) via the first communication network to a receiving apparatus, the data packet (500; 800) including:
a data packet header (510; 808) and
the payload data field (550; 824),
wherein the data packet header (510; 808) comprises a type field (512) and
wherein the type field (512) comprises a first data value when the payload data field (550; 824) of the data packet (500; 800) is not to be transmitted by the receiving apparatus via a second communication network and
wherein the type field (512) comprises a data value differing from the first data value when the payload data field (550; 824) of the data packet (500; 800) is to be transmitted by the receiving apparatus via the second communication network;
**characterized in that**
the data packet header (510; 808) comprises a media-dependent part (511; 816) and a media-independent part (514; 882),
wherein the media-dependent part (511; 816) comprises the type field (512) and
wherein the data packet (500; 800) further comprises one or several check bits (560;826),
wherein the one or several check bits (560;826) depend on the media-independent part (514; 882) of the data packet header (510; 808) of the data packet (500; 800) and depend on the payload data field (550; 824) of the data packet (500; 800) but do not depend on the media-dependent part (511; 816) of the data packet header (510; 808) of the data packet (500; 800), wherein the media-dependent part of a communication medium is at least dependent from one of the communication networks, and wherein the media-independent part is not dependent from the same.

11. Data packet (500; 800) according to claim 10, wherein the data packet (500; 800) includes the payload data field (550; 824) as encrypted payload data field in encrypted form.

12. Data packet (500; 800) according to claim 10 or 11, wherein the data packet header (510; 808) includes the media-independent part (514; 822) as an encrypted media-independent part in encrypted form, wherein the media-independent part is not dependent from the used communication network.

13. Method for transmitting data in communication networks, wherein the communication networks include a first communication network and a second communication network, wherein a payload data field is forwarded from the first communication network to the second communication network, the method comprising:
receiving a data packet from the first communication network, wherein the data packet comprises a data packet header and a payload data field, wherein the data packet header comprises a type field;
transmitting the payload data field via the second communication network when the type field comprises a data value differing from a first data value, and not transmitting the payload data field via the second communication network when the type field comprises the first data value;
**characterized in that**
when the type field comprises the first data value, the data packet is a data packet for managing the first communication network and the data packet is not transmitted via the second communication network when the data packet is a data packet for managing the first communication network; or
the type field of the data packet header comprises exactly one bit, wherein the payload data field is transmitted via the second communication network when the type field comprises a second data value differing from the first data value and wherein the payload data field not transmitted via the second communication network when the type field comprises the first data value; or
the data packet is a received data packet, wherein the data packet header of the received data packet comprises a media-dependent part and a media-independent part, wherein the media-dependent part comprises the type field, wherein, when the type field comprises a data value differing from the first data value, a converted data packet is formed and transmitted via the second communication network, wherein the converted data packet comprises the media-independent part of the data packet header of the received data packet and the payload data field of the received data packet but not the media-dependent part of the data packet header of the received data packet, wherein the received data packet further comprises one or several check bits, wherein, when the type field comprises a data value differing from the first data value, the converted data packet is formed such that the converted data packet comprises the one or several check bits of the received data packet as one or several check bits of the converted data packet without changing the value of the one or several check bits in the converted data packet compared to the one or several check bits of the received data packet, wherein the media-dependent part of a used communication medium is dependent from at least one of the communication networks, and wherein the media-independent part is not dependent from the same; or
the data packet is a received data packet, wherein the data packet header of the received data packet comprises a media-dependent part and a media-independent part, wherein the media-dependent part comprises the type field, and wherein, when the type field comprises a data value differing from the first data value, a converted data packet is formed and transmitted via the second communication network, wherein the converted data packet comprises the media-independent part of the data packet header of the received data packet and the payload data field of the received data packet but not the media-dependent part of the data packet header of the received data packet, wherein the media-independent part of the data packet header of the received data packet is a data packet header according to IEEE 802.15.4 and wherein, when the type field comprises a data value differing from the first data value, the converted data packet is formed such that the converted packet comprises the media-independent part of the data packet header of the received data packet as a data packet header according to IEEE 802.15.4, wherein the media-dependent part of a used communication medium is dependent from at least one of the communication networks, and wherein the media-independent part is not dependent from the same.

14. Method for generating and transmitting a data packet in communication networks, wherein the communication networks include a first communication network and a second communication network, the method comprising:
generating the data packet such that the data packet comprises a data packet header and a payload data field, wherein the data packet header comprises a type field and
transmitting the data packet via the first communication network to a receiving apparatus,
wherein the data packet is generated such that the type field comprises a first data value when the payload data field of the data packet is not to be transmitted by the receiving apparatus via a second communication network and wherein the data packet is generated such that the type field comprises a data value differing from the first data value when the payload data field of the data packet is to be transmitted by the receiving apparatus via the second communication network;
**characterized in that**
the data packet is generated such that the type field comprises the first data value when the data packet is a data packet for managing the first communication network, and wherein the data packet s is generated such that the type field comprises a data value differing from the first data value, when the data packet is not a data packet for managing the first communication network; or
the type field of the data packet header is formed such that the type field of the data packet header includes exactly one bit, wherein the data packet is generated such that the type field comprises the first data value when the payload data field of the data packet is not to be transmitted by the receiving apparatus via the second communication network, and wherein the data packet is generated such that the type field comprises a second data value differing from the first data value when the payload data field of the data packet is not to be transmitted by the receiving apparatus via the second communication network; or
the data packet header of the data packet is formed such that the data packet header comprises a media-dependent part and a media-independent part, wherein the media-dependent part of the data packet header is formed such that the media-dependent part includes the type field, and wherein the data packet is formed such that the data packet further includes one or several check bits, wherein the one or several check bits are determined based on the media-independent part of the data packet header of the data packet and based on the payload data field of the data packet, wherein the media-dependent part of a used communication medium is dependent from at least one of the communication networks and wherein the media-independent part is not dependent from the same.

15. Computer program having a program code for performing a method according to claim 13 or 14 when the computer program is executed on a computer or signal processor.

## Revendications

1. Dispositif (100) de transmission de données dans des réseaux de communication, dans lequel les réseaux de communication comportent un premier réseau de communication et un deuxième réseau de communication, dans lequel le dispositif est conçu pour transférer un champ de données utiles du premier réseau de communication vers le deuxième réseau de communication, dans lequel le dispositif (100) comporte:
une première interface (110) qui est conçue pour recevoir un paquet de données du premier réseau de communication, où le paquet de données comporte un en-tête de paquet de données et le champ de données utiles, où l'en-téte de paquet de données présente un champ type, et
une deuxième interface (120) qui est conçue pour transmettre le champ de données utiles via le deuxième réseau de communication lorsque le champ type présente une valeur de données qui est différente d'une première valeur de données, et où la deuxième interface (120) est conçue pour ne pas transmettre le champ de données utiles via le deuxième réseau de communication lorsque le champ type présente la première valeur de données;
**caractérisé par le fait que**
le paquet de données, lorsque le champ type présente la première valeur de données, est un paquet de données pour gérer le premier réseau de communication, et dans lequel la deuxième interface (120) est conçue pour ne pas transmettre le paquet de données via le deuxième réseau de communication lorsque le paquet de données est un paquet de données pour gérer le premier réseau de communication; ou
le champ type de l'en-tête du paquet de données comporte exactement un bit, où la deuxième interface (120) est conçue pour transmettre le champ de données utiles via le deuxième réseau de communication lorsque le champ type présente une deuxième valeur de données qui est différente de la première valeur de données, et où la deuxième interface (120) est conçue pour ne pas transmettre le champ de données utiles via le deuxième réseau de communication lorsque le champ type présente la première valeur de données; ou
le paquet de données est un paquet de données reçu, où l'en-tête de paquet de données du paquet de données reçu présente une partie dépendante du support et une partie indépendante du support, où la partie dépendante du support comporte le champ type, où la deuxième interface (120) est conçue, lorsque le champ type présente une valeur de données qui est différente de la première valeur de données, pour former un paquet de données transformé et pour le transmettre via le deuxième réseau de communication, où le paquet de données transformé comporte la partie indépendante du support de l'en-tête de paquet de données du paquet de données reçu et le champ de données utiles du paquet de données reçu, mais ne comporte pas la partie dépendante du support de l'en-tête de paquet de données du paquet de données reçu, où le paquet de données reçu comporte par ailleurs un ou plusieurs bits de contrôle, où la deuxième interface (120) est conçue, lorsque le champ type présente une valeur de données qui est différente de la première valeur de données, pour former le paquet de données transformé de sorte que le paquet de données transformé comporte les un ou plusieurs bits de contrôle du paquet de données reçu comme un ou plusieurs bits de contrôle du paquet de données transformé sans changer la valeur des un ou plusieurs bits de contrôle dans le paquet de données transformé en comparaison avec les un ou plusieurs bits de contrôle du paquet de données reçu, où la partie dépendante du support est dépendante d'un support de communication utilisé d'au moins un des réseaux de communication, et où la partie indépendante du support n'est pas dépendante de ce dernier; ou
le paquet de données est un paquet de données reçu, où l'en-tête de paquet de données du paquet de données reçu présente une partie dépendante du support et une partie indépendante du support, où la partie dépendante du support comporte le champ type, où la deuxième interface (120) est conçue, lorsque le champ type présente une valeur de données qui est différente de la première valeur de données, pour former un paquet de données transformé et pour le transmettre via le deuxième réseau de communication, où le paquet de données transformé comporte la partie indépendante du support de l'en-tête de paquet de données du paquet de données reçu et le champ de données utiles du paquet de données reçu, mais ne comporte pas la partie dépendante du support de l'en-tête de paquet de données du paquet de données reçu, où la partie indépendante du support de l'en-tête de paquet de données du paquet de données reçu est un en-tête de paquet de données selon IEEE 802.15.4, et où la deuxième interface (120) est conçue, lorsque le champ type présente une valeur de données qui est différente de la première valeur de données, pour former le paquet de données transformé de sorte que le paquet de données transformé comporte la partie indépendante du support de l'en-tête de paquet de données du paquet de données reçu comme un en-tête de paquet de données selon IEEE 802.15.4, où la partie dépendante du support est dépendante du support de communication utilisé d'au moins un des réseaux de communication, et où la partie indépendante du support n'est pas dépendante de ce dernier.

2. Dispositif (100) selon la revendication 1,
dans lequel le champ de données utiles du paquet de données reçu est un champ de données utiles crypté,
dans lequel la deuxième interface (120) est conçue, lorsque le champ type présente une valeur de données qui est différente de la première valeur de données, pour former, sans décrypter le champ de données utiles crypté, le paquet de données transformé de sorte que le paquet de données transformé comporte le champ de données crypté.

3. Dispositif (100) selon la revendication 1 ou 2,
dans lequel la partie indépendante du support de l'en-tête de paquet de données est une partie cryptée indépendante du support de l'en-tête de paquet de données,
dans lequel la deuxième interface (120) est conçue, lorsque le champ type présente une valeur de données qui est différente de la première valeur de données, pour décrypter la partie cryptée indépendante du support de l'en-tête de paquet de données pour obtenir les informations d'en-tête décryptées qui comportent une adresse de destination, par ailleurs pour former le paquet de données déformé de sorte que le paquet de données déformé comporte la partie cryptée indépendante du support de l'en-tête de paquet de données sans crypter à nouveau les informations d'en-tête décryptées, et par ailleurs, en fonction de l'adresse de destination, pour transmettre le paquet de données déformé via le deuxième réseau de communication vers une destination, où la partie indépendante du support n'est pas dépendante du support de communication utilisé.

4. Dispositif (100) selon l'une des revendications précédentes,
dans lequel la partie indépendante du support n'est pas dépendante du support de communication utilisé;
dans lequel la partie indépendante du support de l'en-tête de paquet de données du paquet de données reçu est un en-tête de couche d'accès au réseau d'une couche d'accès au réseau de la pile de protocoles TCP/IP, et dans lequel la deuxième interface (120) est conçue, lorsque le champ type présente une valeur de données qui est différente de la première valeur de données, pour former le paquet de données déformé de sorte que le paquet de données déformé laisse la partie indépendante du support de l'en-tête de paquet de données du paquet de données reçu comme en-tête de couche d'accès au réseau de la couche d'accès au réseau de la pile de protocoles TCP/IP dans le paquet de données déformé, ou
dans lequel la partie indépendante du support de l'en-tête de paquet de données du paquet de données reçu est un en-tête de couche de liaison de données d'une couche de liaison de données de la pile de protocoles de modèle ISO/OSI, et dans lequel la deuxième interface (120) est conçue, lorsque le champ type présente une valeur de données qui est différente de la première valeur de données, pour former le paquet de données déformé de sorte que le paquet de données déformé laisse la partie indépendante du support de l'en-tête de paquet de données du paquet de données reçu comme en-tête de couche de liaison de données de la couche liaison de données de la pile de protocoles de modèle ISO/OSI dans le paquet de données déformé.

5. Dispositif (200) pour générer et transmettre un paquet de données dans des réseaux de communication, dans lequel les réseaux de communication comportent un premier réseau de communication et un deuxième réseau de communication, dans lequel le dispositif (200) comporte:
une unité de génération (210) qui est conçue pour générer le paquet de données de sorte que le paquet de données présente un en-tête de paquet de données et un champ de données utiles, où l'en-tête de paquet de données présente un champ type, et
une interface (220) qui est conçue pour transmettre le paquet de données à un dispositif de réception via le premier réseau de communication,
dans lequel l'unité de génération (210) est conçue pour générer le paquet de données de sorte que le champ type présente une première valeur de données lorsque le champ de données utiles du paquet de données ne doit pas être transmis par le dispositif de réception via le deuxième réseau de communication, et dans lequel l'unité de génération (210) est conçue pour générer le paquet de données de sorte que le champ type présente une valeur de données qui est différente de la première valeur de données lorsque le champ de données utiles du paquet de données doit être transmis par le dispositif de réception via le deuxième réseau de communication;
**caractérisé par le fait que**
l'unité de génération (210) est conçue pour générer le paquet de données de sorte que le champ type présente la première valeur de données lorsque le paquet de données est un paquet de données pour gérer le premier réseau de communication, et dans lequel l'unité de génération (210) est conçue pour générer le paquet de données de sorte que le champ type présente une valeur de données qui est différente de la première valeur de données lorsque le paquet de données n'est pas un paquet de données pour gérer le premier réseau de communication; ou
l'unité de génération (210) est conçue pour former le champ type de l'en-tête de paquet de données de sorte que le champ type de l'en-tête de paquet de données comporte exactement un bit, où l'unité de génération (210) est conçue pour générer le paquet de données de sorte que le champ type présente la première valeur de données lorsque le champ de données utiles du paquet de données ne doit pas être transmis par le dispositif de réception via le deuxième réseau de communication, et où l'unité de génération (210) est conçue pour générer le paquet de données de sorte que le champ type présente une deuxième valeur de données qui est différente de la première valeur de données lorsque le champ de données utiles du paquet de données ne doit pas être transmis par le dispositif de réception via le deuxième réseau de communication; ou
l'unité de génération (210) est conçue pour former l'en-tête de paquet de données du paquet de données de sorte que l'en-tête de paquet de données présente une partie dépendante du support et une partie indépendante du support, où l'unité de génération (210) est conçue pour former la partie dépendante du support de l'en-tête de paquet de données de sorte que la partie dépendante du support comporte le champ type, et où l'unité de génération (210) est conçue pour former le paquet de données de sorte que le paquet de données comporte par ailleurs un ou plusieurs bits de contrôle, où l'unité de génération (210) est conçue pour déterminer les un ou plusieurs bits de contrôle sur base de la partie indépendante du support de l'en-tête de paquet de données du paquet de données et sur base du champ de données utiles du paquet de données, mais pas sur base de la partie dépendante du support de l'en-tête de paquet de données du paquet de données, où la partie dépendante du support est dépendante d'un support de communication utilisé d'au moins un des réseaux de communication, et où la partie indépendante du support n'est pas dépendante de ce dernier.

6. Dispositif (200) selon la revendication 5, dans lequel l'unité de génération (210) est conçue pour former le paquet de données de sorte que le paquet de données comporte le champ de données utiles comme un champ de données utiles crypté sous forme cryptée.

7. Dispositif (200) selon la revendication 5 ou 6, dans lequel l'unité de génération (210) est conçue pour former l'en-tête de paquet de données du paquet de données de sorte que l'en-tête de paquet de données comporte la partie indépendante du support de l'en-tête de paquet de données comme une partie cryptée indépendante du support de l'en-tête de paquet de données sous forme cryptée, dans lequel la partie indépendante du support n'est pas dépendante du support de communication utilisé.

8. Dispositif (200) selon l'une des revendications 5 à 7,
dans lequel la partie indépendante du support n'est pas dépendante du support de communication utilisé;
dans lequel l'unité de génération (210) est conçue pour former l'en-tête de paquet de données du paquet de données de sorte que la partie indépendante du support de l'en-tête de paquet de données du paquet de données soit un en-tête de couche d'accès au réseau d'une couche d'accès au réseau de la pile de protocoles TCP/IP, ou
dans lequel l'unité de génération (210) est conçue pour former l'en-tête de paquet de données du paquet de données de sorte que la partie indépendante du support de l'en-tête de paquet de données du paquet de données soit un en-tête de couche de liaison de données d'une couche de liaison de données de la pile de protocoles de modèle ISO/OSI.

9. Système de génération et de transmission d'un paquet de données via un premier réseau de communication et de transfert d'un champ de données utiles du paquet de données du premier réseau de communication vers le deuxième réseau de communication, dans lequel le système comporte:
un dispositif (200) selon l'une des revendications 5 à 8 pour générer le paquet de données, et
un dispositif (100) selon l'une des revendications 1 à 4 pour transférer le champ de données utiles du paquet de données via le deuxième réseau de communication,
dans lequel le dispositif (200) selon l'une des revendications 5 à 8 est conçu pour transmettre le paquet de données via le premier réseau de communication au dispositif selon l'une des revendications 1 à 9,
dans lequel le dispositif (100) selon l'une des revendications 1 à 4 est conçu pour recevoir le paquet de données du dispositif (200) selon l'une des revendications 5 à 8,
dans lequel le dispositif (100) selon l'une des revendications 1 à 4 est conçu pour transmettre le champ de données utiles via le deuxième réseau de communication lorsqu'un champ type d'un en-tête de paquet de données du paquet de données présente une valeur de données qui est différente d'une première valeur de données, et
dans lequel le dispositif (100) selon l'une des revendications 1 à 4 est conçu pour ne pas transmettre le champ de données utiles via le deuxième réseau de communication lorsque le champ type de l'en-tête de paquet de données du paquet de données présente la première valeur de données.

10. Paquet de données (500; 800) pour la transmission de données dans des réseaux de communication, dans lequel les réseaux de communication comportent un premier réseau de communication et un deuxième réseau de communication, dans lequel le paquet de données (500; 800) est conçu pour transmettre un champ de données utiles (550; 824) via le premier réseau de communication vers un dispositif de réception, dans lequel le paquet de données (500; 800) comporte:
un en-tête de paquet de données (510; 808), et
le champ de données utiles (550; 824),
dans lequel l'en-tête de paquet de données (510; 808) présente un champ type (512), et
dans lequel le champ type (512) présente une première valeur de données lorsque le champ de données utiles (550; 824) du paquet de données (500; 800) ne doit pas être transmis par le dispositif de réception via le deuxième réseau de communication, et
dans lequel le champ type (512) présente une valeur de données qui est différente de la première valeur de données lorsque le champ de données utiles (550; 824) du paquet de données (500; 800) doit être transmis par le dispositif de réception via la deuxième communication réseau;
**caractérisé par le fait que**
l'en-tête de paquet de données (510; 808) présente une partie dépendante du support (511; 816) et une partie indépendante du support (514; 822),
dans lequel la partie dépendante du support (511; 816) comporte le champ type (512), et
dans lequel le paquet de données (500; 800) comporte par ailleurs un ou plusieurs bits de contrôle (560; 826),
dans lequel les un ou plusieurs bits de contrôle (560; 826) dépendent de la partie indépendante du support (514; 822) de l'en-tête de paquet de données (510; 808) du paquet de données (500; 800) et dépendent du champ de données utiles (550; 824) du paquet de données (500; 800), mais ne dépendent pas de la partie dépendante du support (511; 816) de l'en-tête de paquet de données (510; 808) du paquet de données (500; 800), dans lequel la partie dépendante du support est dépendante d'un support de communication utilisé d'au moins un des réseaux de communication, et dans lequel la partie indépendante du support n'est pas dépendante de ce dernier.

11. Paquet de données (500; 800) selon la revendication 10, dans lequel le paquet de données (500; 800) comporte le champ de données utiles (550; 824) comme un champ de données utiles crypté sous forme cryptée.

12. Paquet de données (500; 800) selon la revendication 10 ou 11, dans lequel l'en-tête de paquet de données (510 ; 808) comporte la partie indépendante du support (514 ; 822) comme une partie cryptée indépendante du support sous forme cryptée, dans lequel la partie indépendante du support n'est pas dépendante du support de communication utilisé.

13. Procédé de transmission de données dans des réseaux de communication, dans lequel les réseaux de communication comportent un premier réseau de communication et un deuxième réseau de communication, dans lequel un champ de données utiles est transféré du premier réseau de communication vers le deuxième réseau de communication, dans lequel le procédé comporte le fait de:
recevoir un paquet de données du premier réseau de communication, dans lequel le paquet de données comporte un en-tête de paquet de données et le champ de données utiles, où l'en-tête de paquet de données présente un champ type,
transmettre le champ de données utiles via le deuxième réseau de communication lorsque le champ type présente une valeur de données qui est différente d'une première valeur de données, et ne pas transmettre le champ de données utiles via le deuxième réseau de communication lorsque le champ type présente la première valeur de données;
**caractérisé par le fait que**
le paquet de données, lorsque le champ type présente la première valeur de données, est un paquet de données pour gérer le premier réseau de communication, et dans lequel le paquet de données n'est pas transmis via le deuxième réseau de communication lorsque le paquet de données est un paquet de données pour gérer le premier réseau de communication; ou
le champ type de l'en-tête de paquet de données comporte exactement un bit, où le champ de données utiles est transmis via le deuxième réseau de communication lorsque le champ type présente une deuxième valeur de données qui est différente de la première valeur de données, et où le champ de données utiles n'est pas transmis via le deuxième réseau de communication lorsque le champ type présente la première valeur de données; ou
le paquet de données est un paquet de données reçu, où l'en-tête de paquet de données du paquet de données reçu présente une partie dépendante du support et une partie indépendante du support, où la partie dépendante du support comporte le champ type, où, lorsque le champ type présente une valeur qui est différente de la première valeur de données, un paquet de données transformé est formé et transmis via le deuxième réseau de communication, où le paquet de données transformé comporte la partie indépendante du support de l'en-tête de paquet de données du paquet de données reçu et le champ de données utiles du paquet de données reçu, mais ne comporte pas la partie dépendante du support de l'en-tête de paquet de données du paquet de données reçu, où le paquet de données reçu comporte par ailleurs un ou plusieurs bits de contrôle, où, lorsque le champ type présente une valeur de données qui est différente de la première valeur de données, le paquet de données transformé est formé de sorte que le paquet de données transformé comporte les un ou plusieurs bits de contrôle du paquet de données reçu comme un ou plusieurs bits de contrôle du paquet de données transformé, sans changer la valeur des un ou plusieurs bits de contrôle dans le paquet de données transformé en comparaison avec les un ou plusieurs bits de contrôle du paquet de données reçu, où la partie dépendante du support est dépendante d'un support de communication utilisé d'au moins un des réseaux de communication, et où la partie indépendante du support n'est pas dépendante de ce dernier; ou
le paquet de données est un paquet de données reçu, où l'en-tête de paquet de données du paquet de données reçu présente une partie dépendante du support et une partie indépendante du support, où la partie dépendante du support comporte le champ type, où, lorsque le champ type présente une valeur différente de la première valeur de données, un paquet de données transformé est formé et transmis via le deuxième réseau de communication, où le paquet de données transformé comporte la partie indépendante du support de l'en-tête de paquet de données du paquet de données reçu et le champ de données utiles du paquet de données reçu, mais ne comporte pas la partie dépendante du support de l'en-tête de paquet de données du paquet de données reçu, où la partie indépendante du support de l'en-tête de paquet de données du paquet de données reçu est un en-tête de paquet de données selon IEEE 802.15.4, et où, lorsque le champ type présente une valeur de données qui est différente de la première valeur de données, le paquet de données transformé est formé de sorte que le paquet de données transformé comporte la partie indépendante du support de l'en-tête du paquet de données du paquet de données reçu comme un en-tête de paquet de données selon IEEE 802.15.4, où la partie dépendante du support est dépendante du support de communication utilisé d'au moins un des réseaux de communication, et où la partie indépendante du support n'est pas dépendante de ce dernier.

14. Procédé de génération et de transmission d'un paquet de données dans des réseaux de communication, dans lequel les réseaux de communication comportent un premier réseau de communication et un deuxième réseau de communication, dans lequel le procédé comporte le fait de:
générer le paquet de données de sorte que le paquet de données comporte un en-tête de paquet de données et un champ de données utiles, où l'en-tête de paquet de données présente un champ type, et
transmettre le paquet de données via le premier réseau de communication à un dispositif de réception,
dans lequel le paquet de données est généré de sorte que le champ type présente une première valeur de données lorsque le champ de données utiles du paquet de données ne doit pas être transmis par le dispositif de réception via le deuxième réseau de communication, et où le paquet de données est généré de sorte que le champ type présente une valeur de données qui est différente de la première valeur de données lorsque le champ de données utiles du paquet de données doit être transmis par le dispositif de réception via le deuxième réseau de communication;
**caractérisé par le fait que**
le paquet de données est généré de sorte que le champ type présente la première valeur de données lorsque le paquet de données est un paquet de données pour gérer le premier réseau de communication, et où le paquet de données est généré de sorte que le champ type présente une valeur de données qui est différente de la première valeur de données lorsque le paquet de données n'est pas un paquet de données pour gérer le premier réseau de communication; ou
le champ type de l'en-tête de paquet de données est formé de sorte que le champ type de l'en-tête de paquet de données comporte exactement un bit, où le paquet de données est généré de sorte que le champ type présente la première valeur de données lorsque le champ de données utiles du paquet de données ne doit pas être transmis par le dispositif de réception via le deuxième réseau de communication, et où le paquet de données est généré de sorte que le champ type présente une deuxième valeur de données qui est différente de la première valeur de données lorsque le champ de données utiles du paquet de données ne doit pas être transmis par le dispositif de réception via le deuxième réseau de communication; ou
l'en-tête de paquet de données du paquet de données est formé de sorte que l'en-tête de paquet de données présente une partie dépendante du support et une partie indépendante du support, où la partie dépendante du support de l'en-tête de paquet de données est formée de sorte que la partie dépendante du support comporte le champ type, et où le paquet de données est formé de sorte que le paquet de données comporte par ailleurs un ou plusieurs bits de contrôle, où les un ou plusieurs bits de contrôle sont déterminés sur base de la partie indépendante du support de l'en-tête de paquet de données du paquet de données et sur base du champ de données utiles du paquet de données, mais pas sur base de la partie dépendante du support de l'en-tête de paquet de données du paquet de données, où la partie dépendante du support est dépendante d'un support de communication utilisé d'au moins un des réseaux de communication, et où la partie indépendante du support n'est pas dépendante de ce dernier.

15. Programme d'ordinateur avec un code de programme pour réaliser le procédé selon la revendication 13 ou 14 lorsque le programme d'ordinateur est exécuté sur un ordinateur ou un processeur de signal.
